(19) Europäisches Patentamt / European Patent Office / Office européen des brevets

(11) **EP 2 552 848 B1**

(12) **FASCICULE DE BREVET EUROPEEN**

(45) Date de publication et mention de la délivrance du brevet:
**12.09.2018 Bulletin 2018/37**

(21) Numéro de dépôt: **11713230.8**

(22) Date de dépôt: **31.03.2011**

(51) Int Cl.:
*C03C 29/00* [(2006.01)]     *C03C 8/24* [(2006.01)]
*C03C 10/04* [(2006.01)]     *C03C 10/06* [(2006.01)]
*C04B 37/00* [(2006.01)]     *C04B 37/02* [(2006.01)]
*H01M 8/24* [(2016.01)]     *H01M 8/02* [(2016.01)]
*C03C 3/062* [(2006.01)]     *C03C 3/064* [(2006.01)]
*C03C 3/068* [(2006.01)]     *C03C 3/066* [(2006.01)]
*C03C 8/02* [(2006.01)]     *H01M 8/12* [(2016.01)]
*H01M 8/0215* [(2016.01)]     *H01M 8/0282* [(2016.01)]

(86) Numéro de dépôt international:
**PCT/EP2011/055057**

(87) Numéro de publication internationale:
**WO 2011/121095 (06.10.2011 Gazette 2011/40)**

(54) **COMPOSITIONS VITROCERAMIQUES POUR JOINTS D'APPAREILS FONCTIONNANT A DE HAUTES TEMPERATURES ET PROCEDE D'ASSEMBLAGE LES UTILISANT**

GLASKERAMIKZUSAMMENSETZUNGEN FÜR LOTVERBINDUNGEN IN VORRICHTUNGEN MIT HOHER BETRIEBSTEMPERATUR UND MONTAGEVERFAHREN MIT DIESEN ZUSAMMENSETZUNGEN

GLASS-CERAMIC COMPOSITIONS FOR JOINTS OF APPLIANCES OPERATING AT HIGH TEMPERATURES, AND ASSEMBLY METHOD USING SAID COMPOSITIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.04.2010 FR 1052467**

(43) Date de publication de la demande:
**06.02.2013 Bulletin 2013/06**

(73) Titulaire: **Commissariat à l'Énergie Atomique et aux Énergies Alternatives 75015 Paris (FR)**

(72) Inventeurs:
- **NONNET, Hélène**
  **F-84260 Sarrians (FR)**
- **CONNELLY, Andrew**
  **Kenilworth**
  **Warwickshire CV8 1DY (GB)**
- **KHEDIM, Hichem**
  **30900 Nîmes (FR)**

(74) Mandataire: **Ilgart, Jean-Christophe et al BREVALEX 95, rue d'Amsterdam 75378 Paris Cedex 8 (FR)**

(56) Documents cités:
- J. E. SHELBY: "Formation and Properties of Calcium Aluminosilicate Glasses", JOURNAL OF THE AMERICAN CERAMIC SOCIETY, vol. 68, no. 3, mars 1985 (1985-03), pages 155-158, XP008129541, ISSN: 0002-7820
- Y. SAKAKI ET AL.: "Glass-ceramics sealants in CaO-Al2O3-SiO2 system", PROCEEDINGS OF THE FIFTH INTERNATIONAL SYMPOSIUM ON SOLID OXIDE FUEL CELLS (SOFC-V), vol. 97-18, 1997, pages 652-660, XP009030926, ISBN: 1-56677-145-5

- **P. Geasee: "Doctoral Thesis: Entwicklung von kristallisierenden Glasloten für planare Hochtemperatur-Brennstoffzellen", 17 février 2003 (2003-02-17), Aachen, Germany, XP008129416, ISBN: 3-8325-0301-3 cité dans la demande page 45, alinéa 2 - page 46, alinéa 1; figure 21a page 56, alinéa 3 page 60, alinéa 1; figure 34 page 76; tableau 8 page 159; exemple CAS2; tableau \***

- **H.-J. Illig et al.: "ABC Glas", 1991, XP007915947, page 121, colonne de droite**

Remarques:

Le dossier contient des informations techniques présentées postérieurement au dépôt de la demande et ne figurant pas dans le présent fascicule.

**Description**

**DOMAINE TECHNIQUE**

L'invention concerne des compositions de verres vitrocéramiques, et plus particulièrement des compositions de verre vitrocéramiques pour des joints d'appareils fonctionnant à hautes températures, par exemple de 600 à 1000°C notamment de 700 à 900°C.

Plus précisément, l'invention concerne des compositions de verre pour des joints d'un électrolyseur haute température (« EHT » ou « HTE » c'est-à-dire « High-Temperature Electrolyzer » en langue anglaise) ou d'une pile à combustible haute température (« SOFC » ou « Solid Oxide Fuel Cell » en langue anglaise) comprenant un empilement de cellules élémentaires.

L'invention concerne, en outre, un procédé d'assemblage d'au moins deux pièces mettant en oeuvre lesdites compositions de verre. Ces pièces sont notamment des pièces qui entrent dans la constitution d'un électrolyseur haute température (« EHT » ou « HTE » c'est-à-dire « High-Temperature Electrolyzer » en langue anglaise) ou d'une pile à combustible haute température (« SOFC » ou « Solid Oxide Fuel Cell » en langue anglaise).

Le domaine technique de l'invention peut ainsi être défini de manière générale comme celui des joints de verre dont la fonction est d'assurer l'étanchéité entre les différents compartiments d'appareils dans lesquels sont véhiculés des fluides à de hautes températures. Plus particulièrement, le domaine technique de l'invention est celui des joints de verre assurant l'étanchéité entre les différents compartiments dans lesquels sont acheminés et produits les gaz dans les électrolyseurs hautes températures ou les piles à combustible hautes températures, notamment ceux comprenant un empilement de cellules élémentaires qui fonctionnent généralement entre 600 et 1000°C, en particulier entre 700°C et 900°C.

Ces joints sont généralement placés au contact de céramiques et/ou de métaux.

**ÉTAT DE LA TECHNIQUE ANTÉRIEURE**

Dans les électrolyseurs hautes températures, l'électrolyse de l'eau à haute température est réalisée à partir d'eau vaporisée. La fonction d'un électrolyseur haute température est de transformer la vapeur d'eau en hydrogène et en oxygène selon la réaction suivante : $2H_2O_{(g)} \rightarrow 2H_2 + O_2$.

Cette réaction est réalisée par voie électrochimique dans les cellules de l'électrolyseur.

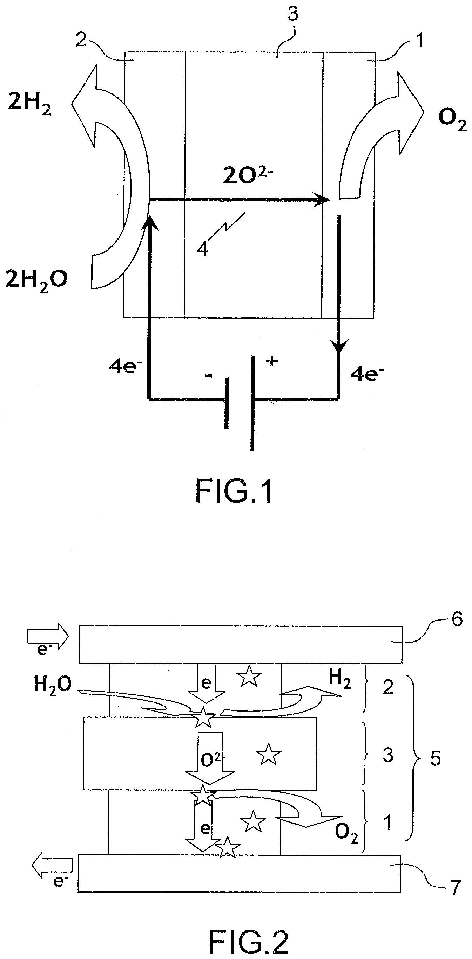

Chaque cellule élémentaire est, comme cela est montré sur la figure 1, constituée de deux électrodes, à savoir une anode (1) et une cathode (2), prenant en sandwich un électrolyte solide généralement sous forme de membrane (3).

Les deux électrodes (1, 2) sont des conducteurs électroniques, et l'électrolyte (3) est un conducteur ionique.

Les réactions électrochimiques se font à l'interface entre chacun des conducteurs électroniques et le conducteur ionique.

A la cathode (2), la demi-réaction est la suivante : $2H_2O + 4e^- \rightarrow 2H_2 + 2O^{2-}$ ;
Et à l'anode (1), la demi-réaction est la suivante: $2O^{2-} \rightarrow O_2 + 4e^-$.

L'électrolyte (3), placé entre les deux électrodes, est le lieu de migration des ions $O^{2-}$ (4), sous l'effet du champ électrique créé par la différence de potentiel imposée entre l'anode (1) et la cathode (2).

Un réacteur élémentaire, représenté sur la figure 2, est constitué d'une cellule élémentaire (5) telle que décrite plus haut, avec une anode (1), un électrolyte (3), et une cathode (2) et de deux connecteurs mono-polaires ou plus exactement deux demi-interconnecteurs (6, 7) qui assurent les fonctions électrique, hydraulique et thermique. Ce réacteur élémentaire est appelé module.

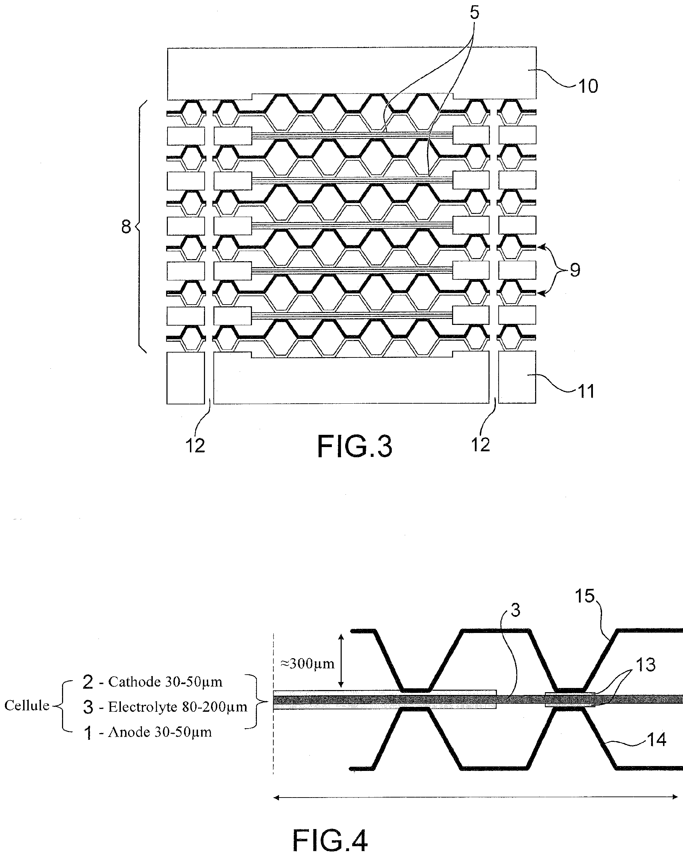

Pour augmenter les débits d'hydrogène et d'oxygène produits, et comme cela est montré sur la figure 3, plusieurs modules élémentaires sont empilés (8), les cellules (5) étant alors séparées par des interconnecteurs ou plaques d'interconnexion bipolaires (9).

L'ensemble des modules (8) est positionné entre deux plaques d'interconnexion supérieure (10) et inférieure (11) qui sont porteuses des alimentations électriques et des alimentations en gaz (12). On parle alors d'empilement ou de « stack » (figure 3).

Il existe deux concepts, configurations, architectures pour les empilements ou « stacks » :

- les stacks tubulaires, dans lesquels les cellules sont des tubes, et
- les stacks planaires, dans lesquels les cellules sont fabriquées sous forme de plaques comme sur la figure 3.

Dans l'architecture planaire, les cellules et les interconnecteurs sont en contact en de nombreux points. La fabrication de l'empilement, du stack, est soumise à des tolérances fines quant à la planéité des cellules afin d'éviter des pressions de contact trop élevées et une distribution inhomogène des contraintes, qui peuvent conduire à la fissuration des cellules.

Les joints d'étanchéité dans un empilement, stack, ont pour objectifs d'empêcher une fuite d'hydrogène de la cathode vers les anodes voisines, d'empêcher une fuite d'oxygène de l'anode vers les cathodes voisines, d'empêcher une fuite d'hydrogène vers l'extérieur de l'empilement, stack, et enfin de limiter les fuites de vapeur d'eau des cathodes vers les anodes.

Dans le cadre du développement d'empilement pour l'électrolyse à haute température (« EHT »), et comme cela est montré sur la figure 4, des joints étanches aux gaz (13) sont ainsi réalisés entre les cellules (5) d'électrolyse planaires (ce positionnement, cette configuration des joints, n'est qu'un exemple parmi de nombreux positionnements et configurations des joints), constituées chacune d'une tri-couche céramique Anode / Electrolyte / Cathode, et les interconnecteurs ou plaques d'interconnexion métalliques (9).

Il est à noter que les dimensions en $\mu$m données sur la Figure 4 ne sont données qu'à titre d'exemples.

Plus précisément, un joint est réalisé d'une part entre la surface inférieure de chaque cellule (5) et le demi-interconnecteur supérieur (14) de la plaque d'interconnexion située en-dessous de la cellule, et d'autre part entre la surface supérieure de chaque cellule et le demi-interconnecteur inférieur (15) de la plaque d'interconnexion située au-dessus de la cellule (5).

Ces joints (13) doivent généralement présenter un débit de fuite sous air inférieur à $10^{-3}$ Pa.m$^3$.s$^{-1}$ entre 700°C et 900°C sous un différentiel de pression de 20 à 500 mbar.

Outre cette fonction d'étanchéité, le joint peut, dans certains cas, avoir des fonctions secondaires d'assemblage et de conduction électrique. Dans d'autres cas, notamment dans le cas des « EHT », on exige plutôt du joint qu'il ne soit pas conducteur électrique. Pour certaines architectures d'empilements, une pièce en céramique, appelée support de cellule, peut être placée entre les cellules et les interconnecteurs ; et des joints étanches aux gaz sont alors également requis avec cette pièce support de cellule.

Il est à noter que la description qui est faite plus haut des empilements ou stacks ainsi que de la disposition des joints n'est donnée qu'à titre d'exemple. Il existe de nombreuses architectures pour ces empilements et il existe aussi de nombreuses configurations pour les joints que nous ne détaillerons pas ici par souci de simplification.

La présente invention est d'application générale quelle que soit la nature, la géométrie, l'architecture des empilements, et la configuration et l'emplacement des joints.

Plusieurs solutions d'étanchéité sont actuellement étudiées, à savoir : les céments ou adhésifs céramiques, les joints en verres ou en vitrocéramiques, les joints métalliques en compression, les joints au mica en compression, les joints brasés et des solutions mixtes faisant appel à plusieurs de ces techniques.

Ces joints doivent permettre d'assurer les étanchéités entre la chambre cathodique et l'extérieur, entre la chambre anodique et l'extérieur, et entre les deux chambres, et d'éviter ainsi les fuites de gaz entre les deux chambres et vers l'extérieur.

Comme cela a déjà été précisé plus haut, nous nous intéressons plus particulièrement dans la présente aux joints en verre.

Les verres utilisés pour ces joints peuvent être soit en verre simple, soit en verre cristallisable aussi appelé vitrocéramique, soit encore en un mélange de ces deux verres, soit encore en verre simple auquel on ajoute des particules céramiques.

La plupart des verres utilisés pour ces joints se trouvent généralement sous une forme solide à la température d'utilisation à savoir généralement entre 600°C et 1000°C, notamment entre 700°C et 900°C, par exemple 850°C. Ces joints sont qualifiés de joints « durs ».

La contrainte principale à respecter dans cette situation est de formuler un joint possédant un coefficient de dilatation/expansion thermique « CET » ou (« Thermal Expansion Coefficient » ou « TEC » en langue anglaise), adapté aux autres éléments de la jonction, notamment aux pièces en céramiques et métalliques.

En ce qui concerne les verres simples, des compositions $SiO_2$-$CaO$-$B_2O_3$-$Al_2O_3$ sont étudiées dans le document [1], des compositions $BaO$-$Al_2O_3$-$SiO_2$ (BAS) sont décrites dans le document [2] et dans le document [3], et enfin des compositions $Li_2O$-$Al_2O_3$-$SiO_2$ sont mentionnées dans le document [4], mais il est difficile avec ces compositions d'atteindre des CET adaptés aux jonctions.

Les verres vitrocéramiques (ou plus simplement les « vitrocéramiques ») sont, quant à eux, de manière générale, présentés comme étant plus résistants chimiquement et mécaniquement grâce au contrôle de la cristallisation du verre à l'aide d'agents nucléants et de traitements thermiques particuliers.

Ces verres vitrocéramiques ont des compositions particulières, qui font que ces verres sont amorphes lorsqu'ils sont fondus lors de leur élaboration, mais qu'ils cristallisent ensuite partiellement ou totalement après un traitement thermique approprié.

L'objectif recherché est de former des phases cristallines qui, en moyenne, donneront au joint un coefficient de dilatation thermique élevé, de manière à pouvoir accommoder les dilatations en cyclages thermiques qu'auront à subir les assemblages céramique/joint/métal ou métal/joint/métal.

Les paramètres à maîtriser pour ces verres vitrocéramiques sont la formulation du verre et des cycles thermiques pour parvenir à former la ou les phase(s) cristalline(s) possédant les propriétés recherchées.

De nombreuses compositions de verres vitrocéramiques ont déjà été décrites.

Ainsi, des compositions de verres vitrocéramiques comprenant $SiO_2$, BaO, et $Al_2O_3$ et éventuellement SrO, CaO, $K_2O$ ou $B_2O_3$ sont mentionnées dans les documents [6] et [7].

Des compositions de verres vitrocéramiques à base de $SiO_2$, BaO, CaO, $Al_2O_3$, $B_2O_3$, et éventuellement $La_2O_3$ font l'objet du document [8].

Des compositions de verres vitrocéramiques comprenant les oxydes $SiO_2$, $Al_2O_3$, $B_2O_3$, $La_2O_3$, et SrO sont décrites dans le document [9].

Des compositions de verres vitrocéramiques comprenant les oxydes BaO, CaO, $Al_2O_3$, $SiO_2$, et éventuellement ZnO, PbO, $B_2O_3$ ou $V_2O_5$ sont mentionnées dans le document [10]. De telles compositions sont des compositions dites de la famille BCAS ou de type BCAS. [10].

Des compositions de verres vitrocéramiques comprenant les oxydes BaO, $B_2O_3$, $Al_2O_3$, $SiO_2$ font l'objet du document [11]. De telles compositions sont des compositions dites de la famille BAS, ou de type BAS.

Des compositions de verres vitrocéramiques comprenant les oxydes $SiO_2$, $Al_2O_3$, $B_2O_3$, MgO sont décrites dans le document [12].

Des compositions de verres vitrocéramiques comprenant les oxydes $SiO_2$, BaO, $B_2O_3$, $Al_2O_3$, et éventuellement les oxydes $Ta_2O_5$, SrO, CaO, MgO, $Y_2O_3$, $La_2O_3$ sont mentionnées dans le document [13].

Des compositions de verres vitrocéramiques comprenant les oxydes $SiO_2$, BaO, ZnO, $B_2O_3$, MgO sont décrites dans le document [14].

Des compositions de verres vitrocéramiques comprenant les oxydes $SiO_2$, $Al_2O_3$ CaO, et éventuellement les oxydes SrO, BaO, MgO, ZnO, $Nb_2O_5$, $Ta_2O_5$, $K_2O$, $GeO_2$, et $La_2O_5$ sont décrites dans le document [15].

Des compositions de verres vitrocéramiques comprenant les oxydes $SiO_2$, CaO, BaO, $Al_2O_3$, et éventuellement l'oxyde SrO sont mentionnées dans le document [16].

Des compositions de verres vitrocéramiques comprenant les oxydes $SiO_2$, CaO, MgO, $Al_2O_3$ font l'objet du document [17].

Cependant, la mise au point des formulations et des traitements thermiques pour les verres vitrocéramiques reste délicate car le matériau de jonction évolue avec le temps, avec la modification des phases cristallines et du fait de la création d'interfaces entre les matériaux en contact. Le développement industriel de ce type de verres vitrocéramiques reste donc complexe.

La plupart des compositions de verres vitrocéramiques mentionnées plus haut présentent donc des inconvénients, liés en particulier au fait qu'elles interagissent avec les substrats avec lesquelles elles sont contact, ce qui provoque ensuite des dégradations réduisant les performances des systèmes tels que les piles à combustible et les électrolyseurs hautes températures où ces compositions sont mises en oeuvre.

L'addition de particules céramiques de différentes tailles et formes à des verres simples permet de contrôler et d'ajuster la viscosité et le CET du matériau de scellement [18, 19]. Le point délicat réside en la présence de phase vitreuse en grande quantité qui peut poser des problèmes de corrosion ou d'évaporation à haute température.

Outre les joints « durs » décrits plus haut qui se présentent sous forme solide à la température de fonctionnement, des compositions $SrO$-$La_2O_3$-$Al_2O_3$-$B_2O_3$-$SiO_2$ qui permettent d'obtenir un état fluide du verre aux températures de fonctionnement sont divulguées dans le document [5]. Ces compositions permettent d'accommoder les grandes différences de CET, mais les formulations développées dans ce document ne se montrent pas assez résistantes d'un point de vue mécanique, justement en raison de cette trop grande fluidité du verre, pour pouvoir maintenir l'étanchéité face aux différences de pressions imposées.

Il ressort de ce qui précède qu'il n'existe pas à l'heure actuelle de composition de verre et plus particulièrement une composition de verre appartenant à la famille des vitrocéramiques donnant satisfaction pour une utilisation dans des joints d'étanchéité pour des appareils fonctionnant à hautes températures tels que des électrolyseurs hautes températures ou des piles à combustible à hautes températures.

Il existe donc un besoin pour une composition de verre, et plus particulièrement pour une composition de verre appartenant à la famille des vitrocéramiques, qui permette de créer un joint solide adapté à la fonction d'étanchéité pour des applications à hautes températures par exemple dans des électrolyseurs hautes températures ou des piles à combustible à hautes températures.

En d'autres termes, il existe un besoin pour une composition de verre, et plus particulièrement pour une composition de verre de type vitrocéramique qui donne un joint résistant chimiquement et mécaniquement, possédant notamment des propriétés mécaniques lui permettant de s'adapter aux CET parfois très différents des matériaux très divers, à assembler avec lesquels elle se trouve en contact, tels que métaux et/ou céramiques, notamment au cours des cycles de chauffage et de refroidissement.

Autrement dit, et plus précisément, il existe un besoin pour une composition de verre, et plus particulièrement pour une composition de verre de type vitrocéramique (aussi appelée composition de vitrocéramique) qui possède avantageusement un coefficient de dilatation élevé, permettant d'accommoder les différents CET des matériaux avec lesquels elle se trouve en contact, notamment au cours des cycles de chauffage et de refroidissement.

Il existe aussi un besoin pour une composition de verre et plus particulièrement pour une composition de verre de type vitrocéramique qui ne soit pas sujette à des phénomènes de corrosion ou d'évaporation à hautes températures.

Il existe encore et surtout, un besoin pour une telle composition de verre, qui ne présente pas ou peu d'interactions avec les matériaux à assembler. En d'autres termes, les interactions de la composition de verre avec les matériaux des divers substrats avec lesquels elle entre en contact, notamment lorsque cette composition est mise en oeuvre en tant que joint pour assembler ces substrats, doivent être limitées, voire inexistantes.

La composition de verre doit présenter les propriétés énumérées plus haut, notamment d'absence ou de quasi-absence d'interaction avec le(s) matériau(x) du(des) substrat(s) et de CET adapté au(x) matériau(x) du(des) substrat(s) quel(s) que soi(en)t ce(s) matériau(x), qu'il s'agisse de céramiques telles que la zircone stabilisée à l'yttrium ou YSZ, ou le Macor®, et/ou de métaux ou alliages tels que les alliages à base de fer comme le Crofer®, ou le F18TNb®, ou les alliages à base de nickel comme le Haynes® 230.

Il existe, enfin, un besoin pour une composition de verre qui puisse être préparée de manière fiable, facile et reproductible sans faire notamment appel à des cycles thermiques complexes.

Il existe enfin un besoin pour une telle composition de verre dont toutes les propriétés restent stables avec le temps, en particulier dans des conditions de hautes températures.

**EXPOSÉ DE L'INVENTION**

Le but de la présente invention est de fournir une composition de verre qui réponde entre autres aux besoins énumérés plus haut.

Le but de la présente invention est encore de fournir une composition de verre qui ne présente pas les inconvénients, défauts, limitations et désavantages des compositions de verre de l'art antérieur et qui résolve les problèmes des compositions de l'art antérieur.

Ce but, et d'autres encore, sont atteints, conformément à l'invention par une composition telle que définie dans la revendication 1.

Il est bien entendu que le total des pourcentages molaires de tous les oxydes constituant la composition vitrocéramique selon l'invention est égal à 100%.

Les compositions (A) et (A9) selon l'invention, que l'on peut définir comme de une nouvelles familles de formulations de verres appartenant à la famille des vitrocéramiques, ne sont pas décrites dans l'art antérieur tel que représenté par les documents cités plus haut, ne présentent pas les défauts et inconvénients des compositions de l'art antérieur et apportent une solution aux problèmes des compositions de l'art antérieur.

Les compositions (A) et (A9 selon l'invention répondent aux besoins et critères énumérés plus haut pour ces compositions.

Les compositions selon l'invention sont des compositions de verres vitrocéramiques, que l'on peut aussi appeler compositions de vitrocéramiques, ce qui signifie que, d'une part, ces compositions ne comprennent pas de phase cristalline à l'issue de leur élaboration, par exemple à une température pouvant aller jusqu'à 1550°C et, d'autre part, qu'après un traitement thermique adéquat, réalisé après leur élaboration, ces compositions comprennent plus de 50% en poids de phase cristalline, de préférence 100% en poids de phase cristalline.

Les compositions selon l'invention ne sont constituées que d'une phase vitreuse amorphe à l'issue de leur élaboration et avant tout (autre) traitement thermique, tout autre maintien à une température élevée. En d'autres termes à l'issue de leur élaboration, et avant tout autre traitement thermique, les compositions selon l'invention sont généralement de nature parfaitement amorphe et sont constituées par 100% de composants vitreux.

En outre, les compositions selon l'invention après leur maintien à un palier de température de 600 à 1000°C, notamment de 700°C à 950°C, par exemple de 800 à 900°C, plus précisément de 800 à 850°C pendant une durée supérieure à 1 heure, de préférence de 50 à 720 heures, de préférence encore de 50 à 100 heures, ledit palier de température étant atteint en observant une ou plusieurs rampe(s) de montée en température, à raison de 0,5 à 3°C/minute ; comprennent plus de 50% en poids de phase cristalline ou composants cristallins, et de préférence 100% en poids de phase cristalline ou composants cristallins, et par voie de conséquence moins de 50% de phase vitreuse ou composants vitreux amorphes et de préférence 0% en poids de phase vitreuse ou composants vitreux amorphes.

Autrement dit, les compositions selon l'invention, qui sont initialement, à l'issue de leur élaboration, de nature vitreuse, amorphe c'est-à-dire qu'elles ne présentent pas de cristallisation du verre, comportent plus de 50% de phase cristalline après leur maintien à des températures élevées telles que les températures de fonctionnement des électrolyseurs ou des piles à combustible hautes températures qui sont généralement de 600°C à 1000°C, notamment de 700°C à 950°C , par exemple de 800°C à 900°C, plus précisément de 800 à 850°C pendant une durée supérieure à une heure et pouvant aller jusqu'à 1 mois ou 720 heures.

Les compositions selon l'invention permettent de créer une étanchéité entre des substrats, pièces en métaux ou alliages métalliques, ou entre des substrats, pièces en céramique, ou encore entre des substrats, pièces en céramique et des substrats pièces en métaux. En effet, les verres selon l'invention, initialement, après élaboration, de nature totalement vitreuse, amorphe, se transforment, se modifient en matériaux vitrocristallins après traitement thermique approprié, généralement dans les conditions mentionnées plus haut qui sont celles régnant dans des appareils tels que des électrolyseurs ou piles à combustible fonctionnant à hautes températures.

On utilise le terme « vitrocristallin » car ces matériaux comportent toujours un reste de phase vitreuse.

Ces matériaux vitrocristallins forment des liaisons solides avec les matériaux et ne créent que des interactions très limitées voire ne créent pas d'interactions avec les matériaux.

Toutes les compositions selon l'invention (A) et (A9) permettent, entre autres, de créer un joint solide adapté à la fonction d'étanchéité que ce joint étant en contact soit uniquement avec des céramiques, soit uniquement avec des métaux, soit encore avec des céramiques et des métaux.

Les compositions selon l'invention présentent également, comme on l'a déjà précisé plus haut, l'avantage surprenant de ne présenter qu'un faible niveau d'interaction, voire pas d'interactions du tout avec les matériaux avec lesquels elles se trouvent en contact, qu'ils s'agissent de céramiques telles que les céramiques type « YSZ », ou « MACOR » ; de métaux et alliages tels que les aciers à forte teneur en chrome (Crofer® ou F18TNb®), les alliages de nickel à forte teneur en chrome (Haynes® 230) ; ou bien encore d'électrolytes tels que l'électrolyte de type LSM ; ou encore de Cermets tels que le Cermet Ni.

De manière surprenante, les compositions selon l'invention présentent ce niveau très faible ou cette absence totale d'interaction avec le substrat en combinaison avec des coefficients de dilatation élevés par exemple de 6 à $12.10^{-6}°C^{-1}$, ce qui leur permet d'accommoder les différents CET que peuvent présenter les matériaux avec lesquelles elles sont en contact au cours des cycles de chauffage et de refroidissement.

La température de transition vitreuse des compositions selon l'invention est généralement inférieure aux températures de fonctionnement préférées des électrolyseurs ou des piles à combustible hautes températures qui sont généralement de 700°C à 900°C, et par exemple de 800°C à 850°C.

Ainsi, les températures de transition vitreuse déterminées par dilatométrie des compositions (A) et (A9) sont elles par exemple respectivement de 708°C à 782°C.

La composition vitrocéramique selon l'invention est choisie dans le groupe constitué par les compositions (A) et (A9). Toutes ces compositions répondent aux besoins et critères mentionnés plus haut et apportent une solution à ces problèmes. En particulier, toutes ces compositions créent des joints solides et étanches, interagissent peu ou pas avec les matériaux des substrats tels que ceux cités plus haut et présentent des CET élevés.

Les compositions (A) et (A9) appartiennent à la famille dite CAS : Calcium Alumino Silicate, qui est formulée pour ses propriétés de forte durabilité chimique et qui possède un fort CET.

Les compositions (A) et (A9) citées plus haut présentent toutes à la fois un CET élevé et de faibles interactions.

Dans ces deux compositions (A) et (A9), plusieurs oxydes additionnels sont employé(s) pour, tout en conservant l'ensemble de propriétés avantageuses déjà citées plus haut, adapter les propriétés des joints créés, et en particulier réduire la température de transition vitreuse et améliorer la formation du joint. Ce ou ces oxyde(s) optionnel(s) sont choisis parmi $ZnO$, $MnO_2$, $B_2O_3$, $Cr_2O_3$, et $TiO_2$.

Avantageusement, la composition (A) est choisie parmi les compositions A1, A4 à A8, A10 à A12 présentées dans le tableau 1 ci-dessous :

Sur ce tableau 1 est également présentée la composition (A9) selon l'invention.

Tableau 1

| | SiO$_2$ | | Al$_2$O$_3$ | | CaO | | ZnO | | MnO$_2$ | | B$_2$O$_3$ | | Cr$_2$O$_3$ | | TiO$_2$ | |
|---|---|---|---|---|---|---|---|---|---|---|---|---|---|---|---|---|
| | %mol. | %mass. | %mol. | %mass. | %mol. | %mass. | %mol. | %mass. | %mol. | %mass. | %mol. | %mass. | %mol. | %mass. | %mol. | %mass. |
| A1 (CAS) | 40,00 | 38,60 | 10,00 | 16,37 | 50,00 | 45,03 | | | | | | | | | | |
| A4 (CAS_ B) | 39,02 | 37, 55 | 9,76 | 15,93 | 48,78 | 43,80 | | | | | 2,44 | 2,72 | | | | |
| A5 (CAS_ B2) | 38,10 | 36,55 | 9,52 | 15,51 | 47,62 | 42,64 | | | | | 4,76 | 5,29 | | | | |
| A6 (CAS_ Mn2) | 39,02 | 37,53 | 9,76 | 15,92 | 48,78 | 43,78 | | | 2,44 | 2,77 | | | | | | |
| A7 (CAS_ Mn) | 38,10 | 36,52 | 9,52 | 15,49 | 47,62 | 42,60 | | | 4,76 | 5,39 | | | | | | |
| A8 (CAS_ Mn3) | 36,36 | 34,65 | 9,09 | 14,70 | 45,45 | 40,42 | | | 9,09 | 10,23 | | | | | | |
| A9 (CAS_ Mn_Cr) | 37,74 | 35,69 | 9,43 | 15,14 | 47,17 | 41,64 | | | 4,72 | 5,27 | | | 0,94 | 2,26 | | |
| A10 (CAS_ Zn) | 38,10 | 36,23 | 9,52 | 15,37 | 47,62 | 42,27 | 4,76 | 6,14 | | | | | | | | |
| A11 (CAS2BT) | 41,46 | 38,71 | 11,76 | 18,62 | 39,48 | 34,40 | | | | | 5,09 | 5,51 | | | 2,22 | 2,75 |
| A12 (CAS2B) | 42,4 | 39,81 | 12,02 | 19,15 | 40,37 | 35,38 | | | | | 5,20 | 5,66 | | | | |

EP 2 552 848 B1

Dans le tableau 1 ci-dessus, les compositions (A) et (A9) selon l'invention sont également dénommées en utilisant une notation dans laquelle apparaît le nom de la famille à laquelle appartient la composition, à savoir CAS, suivi éventuellement de la mention du métal ou des métaux du ou des oxyde(s) optionnel(s) éventuellement inclus dans la composition (par exemple Mn pour MnO).

Les compositions (A) et (A9) selon l'invention peuvent se présenter sous la forme d'une poudre, de préférence d'une poudre préfrittée, ou bien sous la forme d'un bloc massif.

L'invention concerne, en outre, un procédé d'assemblage d'au moins deux pièces, dans lequel on réalise les étapes successives suivantes :

a) on met en contact les pièces avec une composition selon l'invention telle que décrite dans ce qui précède ;
b) on chauffe l'ensemble formé par les pièces et la composition en observant une rampe de température ou plusieurs rampe(s) de température, éventuellement séparée(s) ou interrompue(s) par un ou plusieurs palier(s) de température, à une vitesse de chauffage comprise entre 0,5 et 3°C/min, jusqu'à une température T1 suffisante pour ramollir la composition afin de former un joint entre les pièces ; puis on maintient l'ensemble à une température T2, inférieure ou égale à T1, suffisante, et pendant une durée suffisante pour que la composition se solidifie et comprenne plus de 50% en poids de phase cristalline et de préférence comprenne 100% en poids de phase cristalline ;
c) on refroidit l'assemblage formé par les pièces et le joint jusqu'à la température ambiante ou la température de fonctionnement.

Il est à noter que dans les conditions de fonctionnement, le joint est alors complètement ou partiellement cristallisé, est solide et forme une liaison solide avec les matériaux au contact.

Avantageusement, l'ensemble formé par les pièces et la composition selon l'invention est maintenu à un palier à une température T2 de 600°C à 1000°C, notamment de 700°C à 950°C, par exemple de 800°C à 900°C, plus précisément de 800°C à 850°C, pendant une durée supérieure à 1 heure, de préférence de 50 heures à 720 heures, de préférence encore de 50 à 100 heures.

Selon un premier mode de réalisation, l'étape de mise en contact des pièces avec la composition est réalisée en formant une poudre de la composition, cette poudre ayant de préférence une granulométrie inférieure à 20 $\mu$m, en mettant en suspension cette poudre dans un liant organique de façon à obtenir une pâte, et en enduisant au moins une surface des pièces à assembler avec la pâte obtenue.

Avantageusement, avant d'atteindre la température T1, on peut observer un palier à une température T3 pendant une durée suffisante pour éliminer le liant organique, par exemple on observe un palier à une température T3 de 300 à 500°C, par exemple 400°C, pendant une durée de 60 à 180 minutes, par exemple 240 minutes.

Lors de l'étape b), on peut réaliser le protocole suivant : montée à 0,5°C/minute à partir de la température ambiante, plateau à 400°C pendant 120 minutes, montée à 3°C/minute depuis 400°C ; plateau à 800-950°C pendant 50 heures à 120 heures, descente à raison de 3°C/minute jusqu'à la température ambiante ou la température de fonctionnement.

Selon un deuxième mode de réalisation, l'étape de mise en contact des pièces avec la composition selon l'invention est réalisée en préparant une pièce en verre ayant la forme du joint à former puis en mettant en place cette pièce entre les surfaces des pièces à assembler.

Avantageusement, ladite pièce en verre peut être préparée en compactant puis en frittant une poudre de la composition selon l'invention dans un moule conforme à la forme de la pièce en verre.

Ou bien, ladite pièce en verre peut être un bloc de verre massif préparé par coulée directe de la composition selon l'invention en fusion dans un moule conforme à la forme de la pièce en verre.

A cette étape, le joint sera encore vraisemblablement sous forme vitreuse ; la cristallisation n'intervient qu'à l'application du traitement thermique.

Avantageusement, les pièces à assembler peuvent être en un matériau choisi parmi les métaux ; les alliages métalliques ; les céramiques ; et les matériaux composites comprenant plusieurs parmi les matériaux précités.

Avantageusement, les au moins deux pièces à assembler peuvent être en des matériaux différents.

Avantageusement, les au moins deux pièces à assembler peuvent être des pièces d'un électrolyseur haute température « EHT » ou d'une pile à combustible haute température « SOFC ».

L'invention concerne, en outre, un joint obtenu par le procédé décrit ci-dessus.

L'invention a également trait à un assemblage obtenu par le procédé décrit dans ce qui précède.

L'invention concerne, enfin, un électrolyseur haute température ou une pile à combustible haute température comprenant un tel joint ou un tel assemblage.

**BRÈVE DESCRIPTION DES DESSINS**

L'invention sera mieux comprise à la lecture de la description détaillée qui va suivre donnée à titre illustratif et non limitatif en relation avec les dessins joints, dans lesquels :

- La Figure 1 est une vue schématique en coupe verticale d'une cellule élémentaire d'un électrolyseur haute température (« EHT ») ;
- La Figure 2 est une vue schématique en coupe verticale d'un réacteur élémentaire ou module élémentaire d'un électrolyseur haute température (« EHT ») ;
- La Figure 3 est une vue schématique en coupe verticale d'un électrolyseur haute température classique comprenant un empilement de modules élémentaires ;
- La Figure 4 est une vue schématique en coupe verticale d'un module élémentaire d'un électrolyseur haute température classique qui montre les joints étanches entre la cellule et les interconnecteurs inférieur et supérieur ;
- La Figure 5 est un graphique qui donne un exemple d'un protocole de fusion pour l'élaboration des verres selon l'invention. En abscisse est porté le temps t (en minutes), et en ordonnée est porté la température T (en°C) ;
- les Figures 6, 7 et 8 sont des graphiques qui donnent des exemples de trois protocoles de traitement thermiques pour former un joint solide à partir d'une composition de verre selon l'invention. Plus précisément, il s'agit de trois protocoles de traitement thermiques pour la mise en place et la cristallisation de joints préparés à partir de barbotines. En abscisse est porté le temps t (en minutes), et en ordonnée est porté la température T (en°C) ;
- La Figure 9 est une photographie prise au microscope électronique à balayage (MEB) de l'interface entre un joint formé à partir de la composition de verre selon l'invention désignée « CAS-B2 » et une surface polie d'un substrat en alliage Haynes® 230, après un traitement thermique à 850°C pendant 50 heures et sous une atmosphère d'air. L'échelle en haut à gauche de la figure représente 10 $\mu$m ;
- La Figure 12 est une photographie prise au microscope électronique à balayage (MEB) de l'interface entre un joint formé à partir de la composition de verre selon l'invention désignée « CAS-B2 » et une surface polie d'un substrat en Crofer® après un traitement thermique à 850°C pendant 720 heures et sous une atmosphère d'air. L'échelle en haut à gauche de la figure représente 10 $\mu$m ;
- La Figure 13 est une photographie prise au microscope électronique à balayage (MEB) de l'interface entre un joint formé à partir de la composition de verre selon l'invention désignée « CAS » et une surface d'un substrat en YSZ après un traitement thermique à 850°C pendant 50 heures et sous une atmosphère d'air. L'échelle en haut à gauche de la figure représente 50$\mu$m ;
- La Figure 14 est une photographie prise au microscope électronique à balayage (MEB) de l'interface entre un joint formé à partir de la composition de verre selon l'invention désignée « CAS » et une surface d'un substrat en Macor® après un traitement thermique à 850°C pendant 50 heures et sous une atmosphère d'air. L'échelle en haut à gauche de la figure représente 5 $\mu$m;
- La Figure 17 est une vue schématique en en coupe verticale du montage de mise en pression pour réaliser des essais d'étanchéité avec des joints préparés avec les compositions de verre selon l'invention, avant chargement et traitement thermique ;

- La Figure 18 est une vue schématique en coupe verticale du montage de mise en pression pour réaliser des essais d'étanchéité avec des joints préparés avec les compositions de verre selon l'invention, après chargement et traitement thermique ;
- La Figure 19 est un graphique qui représente les mesures de chute de pression effectuées lors des tests d'étanchéité de vitrocéramiques, réalisés dans l'exemple 3 à 80, 100 et 150 mbar. En abscisse est porté le temps (en minutes) et en ordonnée est portée la température (à gauche en °C) et la pression (à droite en bar). La courbe A représente la pression (en bar) à l'interface Zircone/métal, la courbe B représente la pression (en bar) à l'interface métal/métal, les droites C et D représentent respectivement la température du montage (en °C) et la température ambiante (en °C).

## EXPOSÉ DÉTAILLÉ DE MODES DE RÉALISATION PARTICULIERS

La description détaillée qui suit est plutôt faite par commodité en relation avec le procédé selon l'invention.

La première étape du procédé selon l'invention consiste, tout d'abord généralement, à préparer, élaborer une composition de verre.

Les compositions (A) et (A9) selon l'invention sont constituées par de la silice ($SiO_2$), de l'alumine ($Al_2O_3$), et de l'oxyde de calcium, et par les oxyde (s) additionnels suivants : ZnO, $MnO_2$, $B_2O_3$, $TiO_2$ (Composition de verre A) et $Cr_2O_3$ (dans le cas de la composition (A9)).

Les proportions molaires et les proportions molaires préférées de chacun des constituants dans ees les compositions (A) et (A9) et les proportions molaires de chacun des constituants, dans les compositions particulières A1, A4 à A8, et A10 à A12, ont été mentionnées ci-dessus.

Bien entendu, la somme des pourcentages molaires des constituants de chacune des compositions (A) et (A9) est égale à 100%.

La composition selon l'invention est, selon un premier mode de réalisation, une composition pulvérulente qui peut être préparée, en synthétisant, tout d'abord, à partir de composés, matériaux précurseurs des différents oxydes du verre de ladite composition, un verre contenant ces oxydes.

Par composé, matériau précurseur d'un oxyde, on entend généralement un composé ou matériau qui est susceptible de se transformer en cet oxyde dans les conditions de l'élaboration du verre, notamment lors de la fusion.

Ce ou ces composé(s), matériaux, précurseurs des oxydes peuvent être constitués par ces oxydes purs et/ou par des composés constitués par plusieurs de ces oxydes, et/ou par des matériaux tels que les carbonates, les autres matériaux susceptibles de se transformer en oxydes dans les conditions de l'élaboration du verre, notamment lors de la fusion.

Dans la plupart des cas, le matériau précurseur d'un oxyde est constitué par ce même oxyde pur.

Les oxydes, matériaux précurseurs de ces oxydes et les références des fournisseurs de ces matériaux sont répertoriés dans le Tableau 4 ci-dessous.

Tableau 4 : Matières premières pour les élaborations des verres selon l'invention.

| Oxyde | Matériau précurseur | Fournisseur |
|---|---|---|
| $Al_2O_3$ | $Al_2O_3$ | Prolabo®-20985-361 |
| $B_2O_3$ | $H_3BO_3$ | Prolabo® - 20185-297 |
| BaO | BaO | |
| CaO | CaO | Cerac® - C-1038 |
| $Cr_2O_3$ | $Cr_2O_3$ | Prolabo® - 22798_298 |
| $La_2O_3$ | $La_2O_3$ | Prolabo® - 24960-260 |
| MgO | MgO | Prolabo® - 25061-293 |
| $MnO_2$ | $MnO_2$ | Prolabo® - 25268-366 |
| PbO | PbO | |
| $SiO_2$ | $SiO_2$ | Millisil® - E10 |
| SrO | $SrCO_3$ | |
| $V_2O_5$ | $V_2O_5$ | Prolabo® - 20753-234 |
| $Y_2O_3$ | $Y_2O_3$ | RP - 0E294078 |
| ZnO | ZnO | Prolabo® - 29211-298 |

Ces oxydes purs, composés constitués par plusieurs oxydes, ou matériaux, composés précurseurs sont généralement sous la forme de poudres.

Ils sont tout d'abord séchés, par exemple dans un four à moufle à 50°C.

Puis, ils sont pesés en respectant les proportions voulues dans la composition de verre finale que l'on souhaite obtenir, et ils sont ensuite mélangés et broyés dans tout appareil adéquat, tel qu'un mortier.

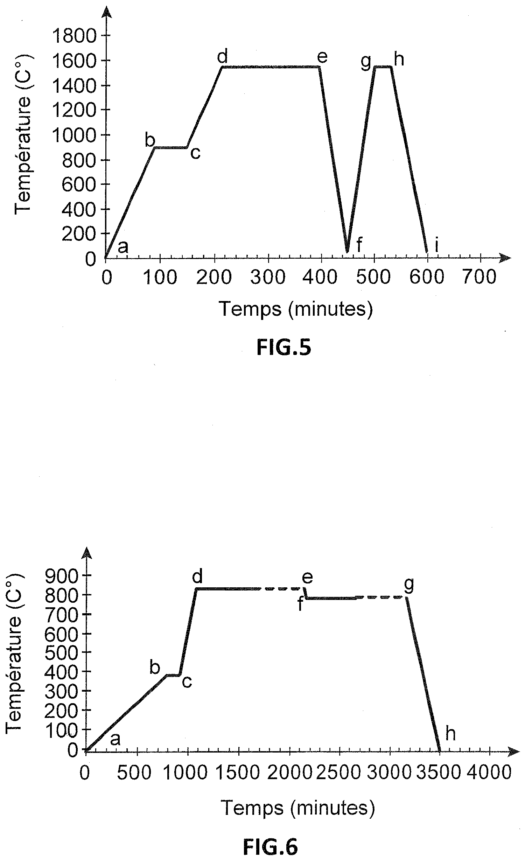

Le mélange de poudres broyées est ensuite introduit dans un creuset, généralement en platine rhodié, et on fait fondre les différents constituants du mélange de poudres en observant par exemple le protocole de fusion suivant, représenté sur la figure 5, et comprenant les étapes successives suivantes, pour l'élaboration des verres :

- *Étape 1 (abc)* : montée en température depuis la température ambiante, à raison de 5 à 15°C/min, par exemple 10°C.min⁻¹ **(ab),** jusqu'à une température de 850°C à 950°C, par exemple 900°C, puis on observe un palier **(bc)** à cette température pendant 45 à 75 minutes, par exemple 1 heure.
  Cette étape est nécessaire pour la décarbonatation des carbonates, si des carbonates sont utilisés dans le mélange de départ.
  Sinon, on effectue une montée en température directe à raison par exemple de 0,5°C/min, depuis la température ambiante jusqu'à la température du palier **(de).**
- *Étape 2 (cde)* : montée en température depuis la température du palier **(bc)** à raison de 5 à 15°C/min, par exemple 10°C.min⁻¹, jusqu'à une température de 1500 à 1600°C, par exemple 1550°C **(cd)** puis on observe un palier à cette température pendant 100 à 200 minutes, par exemple 180 minutes **(de).**
  Cette étape permet de porter le verre à sa température de fusion et permet donc de procéder à son élaboration.
- *Étape 3 (ef)* : le verre fondu est coulé sur une plaque en métal afin de le refroidir rapidement, directement depuis une température de 1500°C à 1600°C, par exemple 1550°C jusqu'à l'ambiante, et de le solidifier. La vitesse de refroidissement est estimée généralement à de 900°C/min à 1200°C/min, par exemple 10³°C/min. Le verre obtenu est ensuite broyé de nouveau puis refondu dans les conditions de l'étape 4 décrites ci-dessous.
- *Étape 4 (fgh)* : remontée en température, depuis la température ambiante à raison de 5 à 15°C.min⁻¹, par exemple

10°C.min$^{-1}$, jusqu'à une température de 1500 à 1600°C, par exemple 1550°C **(fg),** puis on observe un palier à cette température pendant 20 à 40 minutes, par exemple 30 minutes **(gh).**

- *Etape 5 (hi)* : de la même manière que dans l'étape 3, le verre refondu est coulé sur une plaque en métal afin de le refroidir rapidement et de le solidifier.

Après refroidissement, on obtient ainsi un verre homogène dont la température de transition vitreuse varie généralement entre 730°C et 850°C selon sa composition.

Il est à noter que la température des paliers décrits plus haut, par exemple de 1500 à 1550°C, est définie comme étant la température d'élaboration des verres.

Le verre homogène obtenu après refroidissement est récupéré, puis broyé dans un mortier ou tout autre dispositif adéquat pour obtenir une poudre qui est ensuite tamisée pour obtenir une granulométrie adéquate dont les grains ont une dimension, par exemple, un diamètre, de 5 à 250 $\mu$m, de préférence de 10 à 100 $\mu$m, notamment 20 $\mu$m, au moins de 20 $\mu$m.

La poudre tamisée est ensuite mélangée de manière classique à un cément ou liant organique liquide généralement à la fois visqueux et collant afin d'obtenir une pâte de verre dite « barbotine » permettant un étalement homogène sur les surfaces des substrats à assembler, entre lesquelles doit être réalisé un joint étanche.

Autrement dit, le mélange du verre et du liant a généralement la consistance d'une pâte malléable facile à répartir dans les gorges souvent étroites où doivent se loger les joints.

Le liant comprend généralement un ou plusieurs composés dispersants tels que le Terpinéol à raison généralement de 10 à 15% en masse par rapport à la masse totale de la pâte, un ou plusieurs composés liants tels que le polyvinyl butyral (PVB) à raison généralement de 4 à 8% en masse par rapport à la masse totale de la pâte, et un ou plusieurs solvants tels que l'éthanol à raison de 10 à 20% en masse par rapport à la masse totale de la pâte.

On donne dans le tableau 5 ci-dessous une composition typique de la pâte formée avec le liant organique.

Tableau 5 :Composition de la pâte utilisée pour l'étape de mise en forme du joint.

| Composants | % Massique | Rôle |
|---|---|---|
| Terpinéol | 12 | dispersant |
| PVB | 6 | liant |
| Ethanol absolu | 12 | solvant |
| Verre | 70 | base |

La suspension, pâte de la composition de verre décrite précédemment, est étalée, enduite, appliquée, de préférence de façon homogène sur la surface d'au moins l'une des pièces à assembler puis on met en contact les surfaces des deux pièces à assembler. Cette configuration de brasage est généralement appelée « configuration sandwich » car la pâte de la composition de brasure est placée directement entre les surfaces des pièces à assembler.

La quantité de pâte, suspension de composition de brasure à mettre en oeuvre dans cette configuration est généralement de l'ordre de 0,1 à 0,4 cm$^3$ de pâte par cm$^2$.

Ou bien, on rapproche les surfaces des pièces à assembler de façon à laisser un intervalle généralement de 1 à 500 $\mu$m qui sera comblé par effet de capillarité par la composition de brasure, cette dernière étant disposée à proximité de l'intervalle à combler dans un espace ou réservoir ménagé à cet effet, ledit réservoir pouvant avoir des dimensions millimétriques conformément aux connaissances de l'homme du métier dans ce domaine.

Cette configuration de brasage est appelée « configuration capillaire ». Avec les compositions de brasure selon l'invention, il est possible de réaliser un tel brasage capillaire, à savoir une infiltration de la brasure dans le joint de brasage, sans disposer directement la composition de brasure entre les pièces à assembler comme dans le cas de la « configuration sandwich ».

La quantité de pâte, suspension de composition de brasure à mettre en oeuvre dans cette configuration capillaire est généralement du même ordre que celle indiquée plus haut.

D'autres configurations de brasage mettant en oeuvre la pâte de composition de brasure sont bien sûr possibles.

Ou bien, la poudre de verre obtenue comme décrit ci-dessus peut être compactée puis frittée dans un moule ou préforme par exemple en graphite, de forme adaptée correspondant à la forme du joint que l'on souhaite obtenir. Ce moule ou cette préforme peut par exemple comporter une rainure ou gorge dont la forme est celle de la gorge dans laquelle le joint devra venir s'adapter. On obtient ainsi une pièce en verre frittée qui est retirée du moule et qui est ensuite mise en place entre les pièces à assembler.

La composition selon l'invention peut se présenter sous la forme non plus d'une poudre, mais d'un bloc massif.

Précisons qu'une poudre est généralement constituée de particules discrètes dont la dimension, par exemple le diamètre moyen peut aller de 5 $\mu$m à 250 $\mu$m tandis qu'un bloc massif a généralement une taille définie par sa plus grande dimension de 1 à 50 cm.

On peut faire fondre ce bloc massif et couler le verre en fusion directement dans un moule ou préforme par exemple en graphite, de forme adaptée correspondant à la forme du joint que l'on souhaite obtenir. Ce moule ou cette préforme peut, par exemple, comporter une rainure ou gorge dont la forme est celle de la gorge dans laquelle le joint devra venir s'adapter. On obtient ainsi une pièce de verre sous la forme d'un bloc de verre massif qui est retiré du moule et qui est ensuite mis en place entre les pièces à assembler.

La deuxième étape du procédé selon l'invention consiste généralement à réaliser l'assemblage proprement dit.

Préalablement à l'assemblage, et généralement préalablement à l'enduction des surfaces à assembler par une pâte de la composition de verre, ou bien préalablement à la mise en place d'une pièce en verre compacté fritté ou en verre massif, les deux (ou plus) surfaces des pièces à assembler sont généralement dégraissées dans un solvant organique par exemple du type cétone, ester, éther, alcool, ou un mélange de ceux-ci ; puis séchées.

Les pièces à assembler sont en général au nombre de deux, mais on peut aussi assembler simultanément un plus grand nombre de pièces pouvant aller jusqu'à 100.

Selon l'invention, il est possible d'assembler, avec à chaque fois d'excellents résultats des pièces de géométrie, forme complexes et/ou de grande taille.

Les deux pièces ou plus à assembler peuvent être en un même matériau, ou bien elles peuvent être en des matériaux différents. C'est là un des avantages de la composition selon l'invention que de permettre l'assemblage de matériaux très différents, notamment de matériaux dont les coefficients de dilatation thermiques sont très différents.

Les pièces à assembler peuvent être en un matériau choisi parmi les métaux et alliages métalliques; les Cermets ; les céramiques ; et les matériaux composites comprenant plusieurs des matériaux précités.

Parmi les métaux et alliages, on peut citer les aciers, tels que les aciers à forte teneur en chrome comme le Crofer® ou le F18TNb® de chez Arcelor Mittal®; et les alliages de Nickel, tels que les alliages de nickel à forte teneur en chrome, comme le Haynes® 230.

Parmi les céramiques, on peut citer les céramiques de type « YSZ » (Oxyde de zirconium stabilisée à l'yttrium), ou « MACOR® » qui est une vitrocéramique usinable comprenant du $SiO_2$, du $MgO$, de l'$Al_2O_3$, du $K_2O$, du $B_2O_3$ et du fluor, ou bien encore la LSM (Manganite de Lanthane strontiée ($La_{1-x}Sr_xMn_YO_{3-\delta}$))

Parmi les Cermets, on peut citer le Cermet Ni.

L'application privilégiée des compositions de verre selon l'invention est l'assemblage des divers éléments constitutifs d'une « EHT » ou d'une « SOFC » et les matériaux qui peuvent être assemblés par le procédé selon l'invention en mettant en oeuvre la composition selon l'invention seront de préférence choisis parmi les matériaux qui constituent les divers éléments de ces appareils.

Ainsi, les matériaux préférés pour la cathode « EHT » (anode en mode « SOFC ») et l'anode « EHT » (cathode en mode « SOFC ») sont, respectivement, le cermet Oxyde de Nickel-Oxyde de Cérium Gadolinié (NiO-CGO) et la Manganite de Lanthane strontiée ($La_{1-x}Sr_xMn_YO_{3-\delta}$ ou LSM). Un matériau préféré pour l'électrolyte est la LSM.

Il s'agit des matériaux les plus couramment utilisés aujourd'hui industriellement en mode « SOFC », mais de nombreux autres matériaux et combinaisons peuvent être envisagés, tels que le cermet NiO-YSZ, les nickelates ($La_4Ni_3O_{10}$, $La/Nd_2NiO_4$), les chromo-manganites (LaCeSrCrMnO), les ferrites ($La_{1-x}Sr_xFe_YO_{3-\delta}$), les cobaltites (($La_{1-x}Sr_xCO_YO_{3-\delta}$) ou les titanates ($La_4Sr_{n-4}Ti_nO_{3n+2-\delta}$).

Les compositions en pourcentages massiques, et les coefficients de dilatation thermique (« Coefficient of Thermal Expansion » ou « CTE » en anglais) des matériaux métalliques Crofer®, F18TNb®, Haynes® 230, et des céramiques YSZ et Macor® sont données dans les tableaux 6, 7, et 8 ci-dessous :

Tableau 6 : Propriétés et compositions des matériaux mis au contact du joint

| | Crofer® | F18TNb® | Haynes® 230 | YSZ |
|---|---|---|---|---|
| **Propriétés** | | | | |
| $CTE_{mean}$ (x10$^{-6}$ °C$^{-1}$)** | 11,4 | 12,1 | 14,1 | 9,6[#] |
| $CTE_{mean}$ (x10$^{-6}$ °C$^{-1}$)* | 11,9 | 12,8 | 15,2 | |
| **Composition (%massique)** | | | | |
| **Al** | 0,05 | | 0,3 | |
| **B** | | | 0,015 [†] | |
| **C** | 0,03 | 0,02 | 0,1 | |
| **Co** | | | 5 [†] | |
| **Cr** | 20-24 | 17,8 | 22 | |

(suite)

| Composition (%massique) | | | | |
|---|---|---|---|---|
| Cu | 0,5 | | | |
| Fe | ca. 79 ‡ | ca. 80 ‡ | 3 † | <0,01 |
| La | 0,04-0,2 | | 0,02 | |
| Si | 0,1 | 0,5 | 0,4 | |
| Mn | 0,3-0,8 | 0,5 | 0,5 | |
| Mo | | | 2 | |
| Ni | | | ca. 57 ‡ | |
| P | 0,05 | | | |
| S | 0,02 | | | |
| Ti | 0,03-0,2 | Ti+Nb 0, 7 | | |
| W | | | 14 | |
| $ZrO_2$ | | | | 94,8 |
| $Y_2O_3$ | | | | 5,2 |
| $Na_2O$ | | | | <0,01 |

(* CTE depuis la température ambiante jusqu'à 800°C, **CTE depuis la température ambiante jusqu'à 600°C, #CTE depuis la température ambiante jusqu'à 400°C, † indique le maximum et ‡ indique le complément).

Tableau 7 : Composition du Macor® en % massique et estimation de la phase résiduelle

| Macor® | Composition |
|---|---|
| $SiO_2$ | 46 |
| $Al_2O_3$ | 16 |
| $B_2O_3$ | 7 |
| MgO | 17 |
| $K_2O$ | 10 |
| F | 4 |

Tableau 8 : Propriétés du Macor®

| Macor® | De 25°C à 600°C | De 25°C à 800°C |
|---|---|---|
| $CTE_{mean}$ ($x10^{-6}$ °$C^{-1}$) | 11,4 | 12,6 |

Les pièces prêtes à être assemblées sont disposées dans un dispositif de chauffage tel qu'un four ou soumises à un chauffage par tout autre moyen adéquat.

L'assemblage peut être réalisé sous une atmosphère d'air.

Les pièces à assembler dont les surfaces à assembler ont été pourvues de la composition de verre, par exemple de la pâte de verre sont soumises par exemple dans le four à un cycle thermique de chauffage, généralement sous une atmosphère d'air, ou sous une atmosphère de gaz inerte tel que l'argon.

Ce cycle comprend, en tant qu'étape fondamentale un traitement thermique consistant en un palier, plateau thermique réalisé à une température T2 généralement de 800°C à 950°C qui peut être la température maximale T1 du cycle thermique ou une température inférieure à cette température maximale T1, pendant une durée généralement 50 à 720 heures, par exemple de 100 heures. Ce traitement thermique à la température T2 permet de transformer les compositions de verre selon l'invention, initialement amorphes, en matériaux vitrocristallins et de former ainsi une liaison solide, un joint solide, entre les pièces.

Ainsi, l'ensemble formé par les pièces et la composition de verre (pâte, pièce compactée frittée ou pièce massive) peut-il être amené à la température maximale du cycle thermique T1 où l'on peut observer un palier ou plateau thermique, en observant une montée en température de préférence « lente », avec une ou plusieurs rampe(s) de température depuis la température ambiante, cette ou ces rampe(s) étant éventuellement interrompue(s) et/ou séparée(s) par un ou plusieurs palier(s) de température.

Il est important de choisir la vitesse de montée en température de telle sorte qu'il ne se produise aucun phénomène de nucléation durant la phase de montée en température, de manière à éviter tout phénomène de cristallisation qui serait nuisible à la formation d'un joint de bonne qualité.

En effet, la cristallisation se produit lors du palier, plateau thermique à la température T2 inférieure ou égale à la température maximale T1 du cycle, par exemple à 800-950°C décrit plus haut, et non lors de la montée en température.

Cette montée en température peut se faire par exemple avec une ou plusieurs rampe (s) de température ayant chacune une pente, par exemple de 0,5°C par minute à 3°C minute. Cette ou ces rampe(s) étant éventuellement interrompue(s), séparée(s) par un ou plusieurs palier(s) de température.

En général, on commence par effectuer un premier plateau, palier à une température de 300 à 500°C, par exemple de 400°C pendant une durée de 60 à 180 minutes, par exemple de 120 minutes afin d'éliminer le liant organique comprenant un composé dispersant, un composé liant et un composé solvant, cette opération d'élimination du solvant organique est généralement appelée « déliantage ».

Le palier thermique de « cristallisation » peut être réalisé à une température T2 qui est la température maximale T1 du cycle thermique, après une montée en température à raison de 0,5 à 3°C/minute ou bien ce palier thermique peut être réalisé à une température T2 inférieure à la température T1 après avoir observé une descente en température de T1 à T2.

Cette température maximale T1 est une température qui est une température suffisante permettant la formation du joint avec les interfaces c'est-à-dire le mouillage de la composition de verre fondu sur les surfaces des matériaux constituant les pièces à assembler et éventuellement la cristallisation du verre.

Selon les compositions, cette température T1 pourra varier donc, par exemple, de 880°C à 940°C, par exemple elle peut être de 910°C.

Une telle température de mise en forme, ramollissement des compositions permet, selon un autre avantage du procédé de l'invention, une utilisation de l'assemblage, notamment, sous air, par exemple jusqu'à 800°C et même jusqu'à 900°C.

En fin de cycle thermique, suite au palier observé à la température T2 qui peut être la température maximale T1 atteinte lors de ce cycle ou bien une température inférieure, on refroidit l'assemblage jusqu'à la température d'utilisation c'est-à-dire généralement 700°C à 900°C, à raison par exemple de 0,5°C à 3°C par minute ou bien jusqu'à la température ambiante (20 à 25°C) à raison de 0,5°C à 3°C/minute.

On expose ensuite dans ce qui suit divers modes de formation de joints à partir d'une préparation barbotine.

Le joint est préparé à partir de la poudre de verre broyée et tamisée par exemple à moins de 20 $\mu$m. Cette poudre est ensuite mélangée à un liant organique selon les proportions définies dans le Tableau 5 de manière à produire une consistance de pâte qui sera facile à disposer dans les gorges dédiées à l'assemblage.

Pour former le joint solide, différents protocoles de traitement thermique ont été étudiés avec des paliers à 800°C et 950°C pendant des durées de 50, 100 ou 720 heures (Figures 6, 7, et 8). De nouveau, il est important de noter qu'il ne se produit aucun phénomène de nucléation durant la phase de montée en température, de manière à éviter tout phénomène de cristallisation qui serait nuisible à la formation d'un joint de bonne qualité.

Un premier protocole de traitement thermique pour la mise en place et la cristallisation de joints préparés à partir de barbotines est décrit sur la figure 6, ce premier protocole comprend les étapes successives suivantes :

- *Étape 1 (**abc**)* : montée en température depuis la température ambiante, à raison de 0,5°C.min⁻¹ **(ab)** jusqu'à une température située dans la gamme de 350 à-450°C, par exemple de 400°C, suivie d'un palier de 2 heures à cette même température **(bc).**
  Cette étape est nécessaire pour éliminer la phase organique de la pâte de verre.
- *Etape 2 (**cde**)* : montée en température, à raison de 3°C.min⁻¹ ou de 0.5°C.min⁻¹, à partir du palier (bc) jusqu'à la température de 850°C **(cd)** puis palier pendant 100 heures à cette température **(de).**
  Cette étape permet la mise en place et la cristallisation.
- *Etape 3(**efg**)* : descente en température de 850°C jusqu'à 800°C, à raison de 3°C.min⁻¹ **(ef)** et palier de 100 heures à cette température **(fg).**

Ensuite, éventuellement, descente jusqu'à la température ambiante **(gh).**

Cette étape permet d'amener le verre à sa température de fonctionnement dans la cellule afin de le stabiliser à cette température.

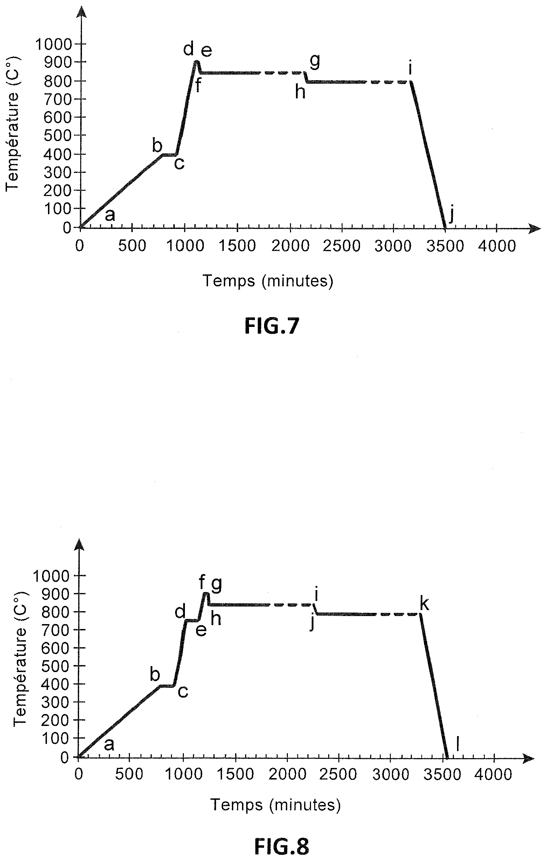

On a cherché ensuite à définir un traitement permettant d'optimiser la qualité du dépôt de verre sur le substrat. La température de mise en place a donc été augmentée et un deuxième protocole de traitement thermique pour la mise en place et la cristallisation de joints préparés à partir de barbotines a été mis au point. Ce deuxième protocole est décrit sur la figure 7, et il comprend les étapes successives suivantes :

- *Étape 1 (**abc**)* : montée en température à raison de 0,5°C.min$^{-1}$ **(ab)** jusqu'à une température située dans la gamme de 350-450°C, par exemple de 400°C, suivie d'un palier de 1 heure à 3 heures, par exemple de 2 heures à cette même température **(bc)**.
  Cette étape est nécessaire pour éliminer la phase organique de la pâte de verre.
- *Étape 2 (cde)* : montée en température, à raison de 3°C.min$^{-1}$ ou de 0,5°C.min$^{-1}$, depuis la température du palier (bc), jusqu'à une température située dans la gamme de 880°C à 940°C, par exemple de 910°C **(cd),** puis palier pendant 20 min à 1 heure, par exemple pendant 20 minutes, à cette température **(de)**.
  Cette étape conditionne la mise en place du joint.
- *Etape 3 (efg)* : descente de 910°C à 850°C, à raison de 3°C.min$^{-1}$ **(ef)** et palier à cette dernière température pendant 50 à 100 heures, par exemple pendant 50 heures **(fg)**.
  Cette étape constitue le traitement de cristallisation.
- *Étape 4 (ghi)* : descente, à raison de 3°C min$^{-1}$, jusqu'à 800°C **(gh),** et palier à cette dernière température pendant une durée de 100 heures à 1000 heures, par exemple pendant 100 heures **(hi)**. Cette étape permet d'amener le verre à sa température de fonctionnement dans la cellule afin de le stabiliser à cette température.

Ensuite, éventuellement, descente jusqu'à la température ambiante **(ij)**.
Le traitement selon le deuxième protocole permet de mieux contrôler la cristallisation dans les verres. En effet, un maintien à une température voisine de (mais supérieure à) la Tg du verre est le traitement idéal pour une nucléation optimale. Cependant, il ne faut pas que ce traitement augmente la viscosité ce qui entrave un bon dépôt du verre à 910 °C.
Un troisième protocole de traitement thermique pour la mise en place et la cristallisation de joints préparés à partir de barbotines est décrit sur la figure 8, ce troisième protocole comprend les étapes successives suivantes :

- *Étape 1 (abc)* : montée en température à raison de 0,5°C.min$^{-1}$ depuis la température ambiante jusqu'à une température située dans la gamme de 350-450°C, par exemple de 400°C **(ab),** suivie d'un palier de 2 heures à cette même température **(bc).**
  Cette étape est nécessaire pour éliminer la phase organique de la pate de verre, comme le traitement de l'étape 1 du premier protocole.
- *Étape 2 (**cde**)* : montée en température **(cd),** à raison de 3°C.min$^{-1}$ ou de 0,5°C.min$^{-1}$, jusqu'à une température située dans la gamme de 730-850°C, par exemple de 760°C, suivie d'un palier de 2 heures à cette température **(de)**.
- *Étape 3 (**efg**):* montée en température **(ef),** à raison de 3°C.min$^{-1}$ ou de 0,5°C.min$^{-1}$, jusqu'à une température située dans la gamme de 880 à 940°C, par exemple de 910°C, puis palier à cette température pendant 20 min **(fg)**.
  Cette étape est équivalente à l'étape 2 du traitement selon le premier protocole.
- *Étape 4 (**ghi**)* : descente en température de 910°C à 850°C, à raison de 3°C.min$^{-1}$ ou de 0,5°C.min$^{-1}$ **(gh)** et palier pendant 50-100 heures, par exemple 50 heures, à cette température **(hi)**. Cette étape constitue le traitement de cristallisation.
- *Étape 5 (ijk)* : descente, à raison de 3°C.min$^{-1}$, jusqu'à 800°C **(ij)** suivie d'un palier de 100 à 1000 heures **(jk)** à cette température. Cette étape permet d'amener le verre à sa température de fonctionnement dans la cellule afin de le stabiliser à cette température.

Ensuite, éventuellement, descente jusqu'à la température ambiante **(kl)**.
Un autre protocole de mise en forme de joint sous forme solide est aussi testé par frittage de la poudre de verre compactée dans des préformes de manière à élaborer un objet solide (type barrettes, de dimensions caractéristiques 100 à 150 mm de long, 2 à 4 mm de large et 1 à 2 mm de haut, ou de type bagues de diamètre interne de 15 à 25 mm et de 1 à 2 mm d'épaisseur).
Le traitement thermique appliqué une fois la poudre disposée dans le moule est le suivant :

- montée à raison de 0,5°C.min$^{-1}$ jusqu'à une température comprise entre 730°C et 850°C (selon la composition du verre) ;
- maintien à cette température pendant une durée de 30 minutes à 2 heures ;
- refroidissement à raison de 3°C.min$^{-1}$ jusqu'à la température ambiante.

Les assemblages de pièces comportant des joints préparés par le procédé selon l'invention permettent de réaliser des structures, appareils, composants de formes complexes ayant des températures d'utilisation élevées pouvant aller généralement jusqu'à 900°C avec une grande précision.

En d'autres termes, le procédé selon l'invention peut notamment s'appliquer à la fabrication de tout dispositif, appareil, structure, composant, nécessitant un assemblage entre au moins deux substrats, pièces en garantissant à la fois une bonne tenue mécanique et une étanchéité satisfaisante au niveau de l'assemblage.

Ces dispositifs, appareils, structures, composants peuvent répondre à des besoins dans différents domaines mais le domaine préféré auquel s'applique l'invention est celui des électrolyseurs et des piles à combustible hautes températures.

L'invention va maintenant être décrite au moyen des exemples suivants donnés bien entendu à titre illustratif et non limitatif.

**EXEMPLES :**

Exemple 1 :

Dans cet exemple, on prépare des verres conformes à l'invention par le procédé d'élaboration décrit plus haut et on détermine les principales propriétés physiques de ces verres.

Ces propriétés sont :

- la nature amorphe ou cristalline du verre déterminée par diffraction des rayons X (« XRD ») ;
- la masse volumique MV (en $g/cm^3$) déterminée par une méthode de poussée hydrostatique ;
- la température de transition vitreuse Tg (°C) déterminée par analyse thermique différentielle (« DTA ») et par dilatométrie ;
- la température de cristallisation Tx (°C) déterminée par analyse thermique différentielle (« DTA ») ;
- la température de ramollissement Td (°C) et le coefficient de dilatation thermique (« CTE ») déterminés par dilatométrie.

Compositions de verres (A) **et (A9),** Verres CAS

Les principales propriétés de ces verres sont rassemblées dans le Tableau 9 ci-dessous.

Tous ces verres peuvent être élaborés à une température inférieure à 1550°C et sont de nature parfaitement amorphe.

Tableau 9 : Principales propriétés des verres CAS

| Verre | Température d'élaboration | XRD | MV | DTA | | | Dilatométrie | | |
|---|---|---|---|---|---|---|---|---|---|
| | | | | $T_g$ (°C) | $T_x$ (°C) | $T_x$-$T_g$ | $T_g$ (°C) | $T_d$ (°C) | CTE* ($10^{-6}$°$C^{-1}$) |
| CAS | 1500°C | Amorphe | 2,90 | 789 | 1063 | 274 | 782 | | 9,94 |
| CAS-B | 1500°C | Amorphe | 2,88 | 763 | 1035 | 272 | 741 | | 9,96 |
| CAS-B2 | 1500°C | Amorphe | 2,83 | 731 | 1028 | 297 | 708 | 744 | 9,67 |
| CAS-Mn2 | 1500°C | Amorphe | | 783 | 1067 | 284 | 766 | 804 | 10,01 |
| CAS-Mn | 1500°C | Amorphe | 2,95 | 774 | 1040 | 266 | 761 | | 10,02 |
| CAS-Mn3 | 1450°C | Amorphe | | 756 | 922/999 | 166 | | | |
| CAS-Zn | 1500°C | Amorphe | 2,97 | 752 | 988/1058 | 236 | 748 | | 9,57 |
| CAS-Mn-Cr | 1500°C | Amorphe | 2,95 | | | | 756 | 791 | 9,32 |

Exemple 2 :

Dans cet exemple, on étudie les caractéristiques des joints formés avec les compositions de verre selon l'invention.

Cette étude consiste à déterminer la qualité des interfaces et la nature des phases cristallines formées.

Qualité des interfaces.

On étudie les interactions de compositions de verre selon l'invention avec divers matériaux constituant un électrolyseur, à diverses températures de fonctionnement, à savoir 800 à 900°C, et pendant diverses durées, à savoir 50 à 720 heures, sous atmosphère oxydante (air).

Ces essais sont conduits au laboratoire avec des échantillons de matériaux représentatifs de l'électrolyseur, sur lesquels on dispose une petite quantité de pâte de verre mise en oeuvre de la même manière que pour les essais sur les prototypes d'électrolyseurs. Les échantillons verre/métal et verre/céramique sont traités sous air dans un four à moufle selon le protocole de traitement thermique de la figure 6.

On observe ensuite l'interface avec un microscope électronique à balayage (MEB).

• Verres de la famille CAS.

Pour les verres de la familles CAS, les meilleures caractéristiques des joints en termes de qualité de contact et d'interface avec les différents substrats sont obtenues après un traitement à 850°C pendant une durée d'au moins 50 heures, selon le protocole décrit sur la Figure 6.

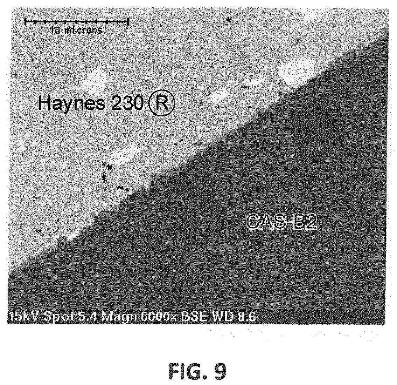

A l'interface avec les métaux, les meilleures qualités d'adhérence sont obtenues avec les surfaces métalliques préalablement polies comme cela ressort de la Figure 9 qui est une photographie prises au MEB de l'interface entre le verre CAS-B2 et une surface polie d'un substrat en alliage Haynes® 230. Sur la Figure 9, le traitement thermique a été réalisé à 850°C pendant une durée de 50 heures.

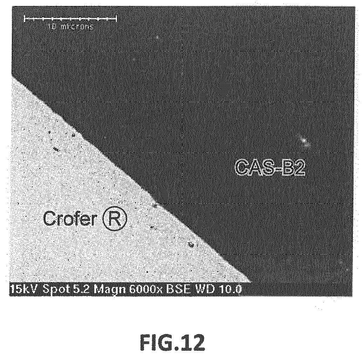

Pour toutes les compositions de verre, une couche d'oxyde de chrome d'épaisseur de l'ordre de 1 à 2 $\mu$m est observée à l'interface. Une exception est constatée pour la composition CAS-B2 pour laquelle aucune phase interstitielle n'est observée après un traitement à 850°C de 720 heures, comme on peut le constater sur la figure 12 qui est une photographie prise au MEB de l'interface entre le verre CAS-B2 et une surface polie d'un substrat en Crofer®.

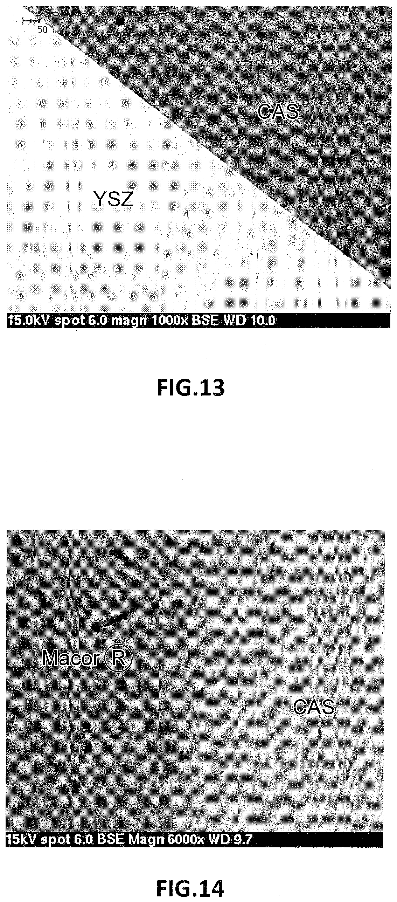

L'interface entre les joints et la céramique YSZ est toujours de bonne qualité ; aucune nouvelle phase interfaciale n'est formée et aucune interdiffusion majeure n'est observée comme cela peut être observé sur la Figure 13 qui est une photographie prise au MEB de l'interface entre le verre CAS et une surface d'un substrat en céramique YSZ.

Au contact avec le Macor®, l'adhérence est bonne, mais il y a formation d'une couche interfaciale riche en $Al_2O_3$, comme cela peut être observé sur la Figure 14 qui est une photographie prise au MEB de l'interface entre le verre CAS et une surface d'un substrat en Macor®.

Pour les figures 13 et 14, le traitement thermique a été réalisé à 850°C pendant 50 heures.

Nature des phases cristallines formées

La nature des phases formées lors de la cristallisation dépend de la durée du traitement, de la température et de la composition chimique du verre initial.

Après le traitement thermique de mise en forme du joint, celui-ci se trouve dans un état totalement cristallisé ou dans un état partiellement cristallisé (cristallin) où la phase cristallisée représente plus de 50% de la masse du joint.

Certaines des phases présentes dans les joints traités ont été identifiées et sont répertoriées dans les tableaux 12, 13 et 14 suivants.

Dans les tableaux 12, 13 et 14, les notations suivantes sont utilisées :

-  « x » indique que les mesures n'ont pas été faites ;
-  « amp » indique que le verre est amorphe ;
-  « $U_n$ » par exemple $U_6$, indique une phase cristalline non identifiée portant le numéro n, et $U_{nmajor}$ ou $U_{nminor}$ indiquent que cette phase cristallisée $U_n$ est majoritaire, respectivement minoritaire ;
-  Le nombre à 4 chiffres porté dans les tableaux 12, 13 et 14 pour désigner les matériaux constituant les phases cristallines formées, par exemple 0302, 0755, correspond à la clé du code de la fiche matériau JCPDS de ces matériaux, donnée dans le tableau 15 ci-dessous.

Traitement Thermique

Tableau 12 : Phases cristallines formées en fonction de la durée et de la température du traitement thermique pour les verres CAS.

| Verre | 800°C | | 850°C | | 950°C |
|---|---|---|---|---|---|
| | 50 h. | 100 h. | 100 h. | 720 h. | 100 h. |
| CAS | x | amp | 0302 /$U_{3minor}$ | 0755$_{minor}$ / $U_{1major}$ | 0755 / $U_{6minor}$ |
| CAS-B | x | amp | 0088 / $U_{1major}$ | x | x |
| CAS-B2 | x | x | 0088 / 0369 / 0755 | 0088 / 0369 / 0755 | x |
| CAS-Mn | amp | amp | 0755 / $U_{1minor}$ | x | x |
| CAS-Mn2 | x | x | x | 0755$_{minor}$ / $U_{1major}$ | x |
| CAS-Mn3 | x | x | x | x | x |
| CAS-Zn | x | 0755 | x | x | x |
| CAS-Mn-Cr | x | 0755 | 0755 / 0865 / $U_{6minor}$ | 0755 / 0865 / $U_{6minor}$ | x |

Tableau 15 : Clés et codes JCPDS des matériaux observés.

| Clé | Nom | Formule Chimique | Code |
|---|---|---|---|
| 0302 | Larnite, syn | $Ca_2SiO_4$ | 00-033-0302 |
| 0755 | Gehlenite, syn | $Ca_2Al_2SiO_7$ | 00-035-0755 |
| 1257 | Silicate de Strontium | $SrSiO_3$ | 00-032-1257 |
| 0099 | Silicate de Strontium | $SrSiO_3$ | 00-034-0099 |
| 2456 | Silicate de Lanthane | $La_2Si_2O_7$ | 01-072-2456 |
| 0865 | Calcium manganese aluminium silicate | $Ca_{2.43}Mn_{1.29}Al_{1.28}(SiO_4)_3$ | 01-078-0865 |
| 0369 | Silicate de Calcium | $Ca_2SiO_4$ | 00-029-0369 |
| 0088 | Wollastonite-2M | $CaSiO_3$ | 00-027-0088 |

Les compositions des phases vitreuses résiduelles ont été estimées à partir de la composition des verres initiaux en supposant le processus de cristallisation complet et les phases cristallisées connues.

Les compositions extrapolées et approximées (en % molaire) des phases vitreuses résiduelles dans les joints préparés avec les compositions de verre CAS, après traitement thermique à une température de 850°C pendant 50 heures, sont données dans le tableau 16 ci-dessous.

La majorité des phases vitreuses résiduelles sont de durabilité élevée, à l'exception peut être des phases riches en $B_2O_3$ et $MnO_2$ qui seront plus visqueuses et donc moins durables.

Tableau 16 : Compositions extrapolées et approximées (en % molaire) des phases vitreuses résiduelles dans les joints CAS après traitement thermique

| Composition | Phase cristalline | $SiO_2$ | $Al_2O_3$ | CaO | ZnO | $MnO_2$ | $B_2O_3$ | $Cr_2O_3$ |
|---|---|---|---|---|---|---|---|---|
| CAS | 0302 | 60,0% | 40,0% | | | | | |
| | 0755 | 50,0% | | 50,0% | | | | |
| CAS-B | 0088 | | 44,4% | 44,4% | | | 11,1% | |
| CAS-B2 | 0088 | | 40,0% | 40,0% | | | 20,0% | |
| | 0369 | | 50,0% | 33,3% | | | 16,7% | |
| | 0755 | 46,2% | | 46,2% | | | 7,7% | |
| CAS-Mn2 | 0755 | 48,0% | | 48,0% | | 4,0% | | |
| CAS-Mn | 0755 | 46,2% | | 46,2% | | 7,7% | | |
| CAS-Mn3 | 0755 | 42,9% | | 42,9% | | 14,3% | | |

(suite)

| Composition | Phase cristalline | $SiO_2$ | $Al_2O_3$ | CaO | ZnO | $MnO_2$ | $B_2O_3$ | $Cr_2O_3$ |
|---|---|---|---|---|---|---|---|---|
| CAS-Mn-Cr | 0755 | 45,5% | | 45,5% | | 7,6% | | 1,5% |
| | 0865 | 33,3% | 9,5% | 55,6% | | 0% | | 1,6% |
| CAS-Zn | 0755 | 43,8% | | 50,0% | 6,2% | | | |

Exemple 3 :

Dans cet exemple, on réalise des tests d'étanchéité par mesure de chute de pression sur des joints vitrocéramiques préparés avec la composition de verre « CAS-B2 » selon l'invention.

Préparation du joint.

On utilise un mode de mise en forme classique pour le joint de verre qui consiste à préparer une pâte de verre ou barbotine composée d'un mélange du verre broyé à une granulométrie de 0 à 20 $\mu$m de terpinéol, de polyvinylbutyral et d'éthanol.

Les proportions massiques utilisées pour la réalisation de ce mélange sont de 12% de terpinéol qui joue le rôle de dispersant, de 6% de polyvinylbutyral qui joue le rôle de liant, de 12% d'éthanol qui joue le rôle de solvant et de 70% de poudre de verre. Le mélange obtenu a la consistance d'une pâte malléable, facile à répartir.

Montage d'étanchéité et de mise en pression.

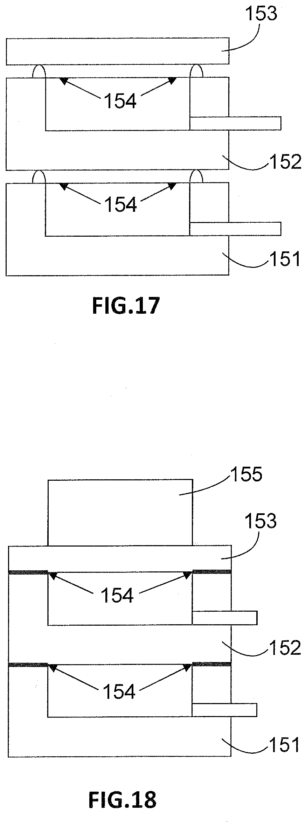

Le montage de test utilisé pour les tests d'étanchéité et de mise en pression est schématisé sur les Figures 17 et 18.

La figure 17 représente le montage avant chargement et traitement thermique tandis que la figure 18 représente le montage après chargement et traitement thermique

Le montage de test est constitué essentiellement de 3 parties :

- un premier plateau en Inconel® XC 750 (CET : environ 15,7 $10^{-6}k^{-1}$) (151);
- un second plateau en Inconel® XC 750 (152) disposé sur le premier plateau (151) ;
- un disque ou sole en zircone (153) simulant la cellule ;
- une charge gravitaire.

Pour réaliser un essai d'étanchéité, on dépose la barbotine de joint vitrocéramique (154) préparée comme décrit plus haut entre le premier plateau (151) et le second plateau (152) en Inconel® XC 750 et entre le second plateau (152) en Inconel® XC 750 et la sole en Zircone (153). L'essai se fait à 800°C avec une charge gravitaire de 38 kg (155) appliquée à froid.

Le montage de la figure 17 est intégré dans un circuit de mise sous pression alimenté par un circuit d'hélium comprenant des vannes de réglage, de purge et d'isolement, et un capteur.

Mise en place de la barbotine

La barbotine de joint est déposée manuellement sous forme de cordons (154) à l'aide d'une seringue sur les plateaux en Inconel® XL750 sur un diamètre d'environ 50 mm.

La sole en zircone (153) est ensuite déposée sur le cordon puis la charge gravitaire de 38 kg (155) est rajoutée (Figure 18) et l'ensemble est ensuite positionné dans un four NABERTHERM® L120/12 n°177144- 1200°C avec passage de la tuyauterie en partie basse de la porte guillotine.

Réalisation de l'essai et résultats

Les tests d'étanchéité sont conduits à 800°C ; ils consistent à mesurer la chute de pression qui se produit au cours du temps dans le montage proposé. Le gaz utilisé est l'hélium qui est mis en surpression dans le montage par paliers de 50 mbar. On procède par étapes avec 3 séries de tests à 80 mbar, 100 mbar, et 150 mbar.

Le cycle thermique appliqué au montage est le suivant :

- montée en température à raison de 0,5°C/min jusqu'à 400°C ;
- plateau de température de 120 min à 400°C pour réaliser le déliantage des composants organiques ;
- montée en température à raison de 3°C/min jusqu'à 850°C ; maintien pendant 100 h à 850°C ;
- descente en température jusqu'à à 800°C (température du test) à raison de 0,5°C/min ;
- maintien de la température (800°C) pendant toute la durée de l'essai.

On définit le taux de fuite par la relation suivante :

$$Q = \frac{\Delta P * V}{t}$$

dans laquelle :

- Q représente le taux de fuite en mbar.L.s-1 ;
- V représente le volume considéré en L.
- ΔP représente la chute de pression en mbar ;
- t représente le temps en secondes.

Trois séries de tests ont été réalisées à 80, 100 et 150 mbar.

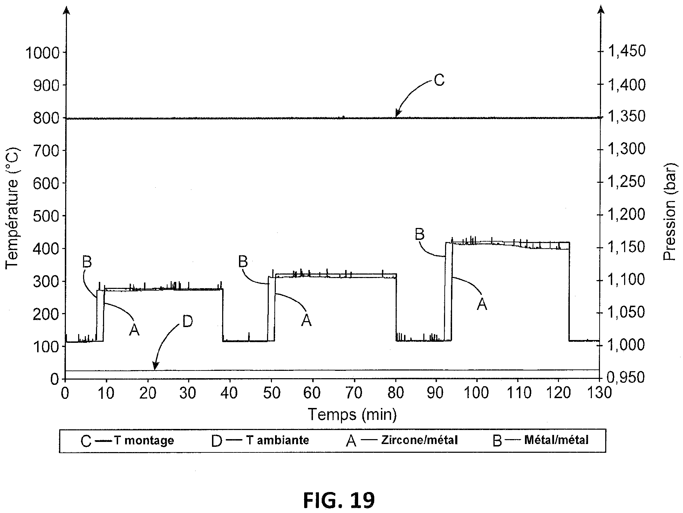

Le graphique de la figure 19 présente l'ensemble des mesures effectuées.

Ces tests d'étanchéités préliminaires montrent de bonnes performances du joint vitrocéramique au niveau des deux interfaces Métal/Métal et Métal/Céramique.

Lors de ces trois tests, le retour à la pression atmosphérique se fait après ouverture des vannes d' isolement du montage. Les résultats des tests sont présentés dans les tableaux 19 et 20 ci-après.

Le tableau 19 rend compte de l'étanchéité à l'interface Zircone/Métal et le tableau 20 concerne l'interface Métal/Métal.

Tableau 19

| Test d'étanchéité - Zircone/Métal - 800°C | | | | | |
|----|----|----|----|----|----|
| N° | Temp. de test | Delta P fixé | ΔP | Durée | Q |
|    | °C | mbar | mbar | s | mbar.l/s |
| 1 | 799 | 80 | 1 | 1740 | 2,09E-04 |
| 2 | 799 | 100 | 1 | 1740 | 2,09E-04 |
| 3 | 799 | 150 | 1 | 1740 | 2,09E-04 |

Tableau 20

| Test d'étanchéité - Métal/Métal - 800°C | | | | | |
|----|----|----|----|----|----|
| N° | Temp. de test | Delta P fixé | ΔP | Durée | Q |
|    | °C | mbar | mbar | s | mbar.l/s |
| 1 | 799 | 80 | 1 | 1800 | 2,02E-04 |
| 2 | 799 | 100 | 1 | 1800 | 2.02E-04 |
| 3 | 799 | 150 | 10 | 1800 | 2,02E-03 |

Tableaux 19 et 20 montrant les résultats de tests d'étanchéité d'un joint vitrocéramique.

La mesure des taux de fuite révèle une efficacité des joints certaine.

On note donc que les résultats obtenus avec des joints selon l'invention sont très bons et satisfont le critère d'étanchéité demandé dans certaine architecture de « EVHT ».

En outre, des tests effectués sur de plus longues durées (300 heures) ont montré :

- à l'interface Métal/Métal, un retour progressif à la pression atmosphérique au bout des 300 heures, ce qui démontre un taux de fuite moyen de $2.10^{-4}$ mbar.l.s$^{-1}$ en hélium avec une pression initiale de 200 mbar à 800°C,

- à l'interface Zircone/Métal, une stabilisation du delta de pression aux alentours des 130 mbar et ce sur ces 300 heures.

## REFERENCES

[1] Zheng R. et al., Journal of Power Sources, 128 (2004), 165-172.
[2] Eichler K. et al., Journal of the European Ceramic Society, 19 (1999), 1101-1104.
[3] Loehman R. et al., Brow R. "Engineered Glass Composites for Sealing Solid Oxide Fuel Cells" SECA Core Technology Program Review, May 11-13, 2004 Boston, USA.
[4] US-A-4,921,738.
[5] WO-A1-96/05626.
[6] US-B1-6,430,966.
[7] US-B1-6,532,769
[8] Meinhardt KD et al., Journal of Power Sources, 182, (2008), 188-196
[9] Ley KL et al., Journal of Material Research, 11 (6), (1996),1489-1496
[10] Geasee P, Thesis, Berlin, (2003), ISBN 3-8325-0301-3
[11] Lahl et al., journal of Material Science, 35, (2000), 3089-3096
[12] Bahadur D et al., Journal of the Electrochemical Society, 151 (4), (2004), A558-A562
[13] Flügel A et al., Journal of the Electrochemical Society, 154 (6), (2007), A601-A608
[14] Pascual et al., Journal of Power Sources, 169, (2007), 40-46
[15] US-A1-2008/0090715
WO-A2-2007/120546
WO-A1-99/54131
WO-A1-2006/069753
US-B2-6,828,263

## Revendications

1. Composition vitrocéramique **caractérisée en ce qu'**elle est choisie dans le groupe constitué par :

   • Une composition (A) constituée en pourcentages molaires par :

   - 36 à 43% de $SiO_2$, de préférence 36 à 42% de $SiO_2$ ;
   - 9 à 13% d'$Al_2O_3$, de préférence 9 à 12% d'$Al_2O_3$;
   - 38 à 50% de CaO ; et par un ou plusieurs oxyde(s) additionnel(s) choisi(s) parmi les oxydes suivants dans les pourcentages molaires suivants :
   - 4 à 5% de ZnO ;
   - 2 à 9 % de $MnO_2$ ;
   - 2 à 6 % de $B_2O_3$ ;
   - 2 à 4% de $TiO_2$ ;

   • et une composition (A9) constituée en pourcentages molaires par 37,74% de $SiO_2$ ; 9,43% de $Al_2O_3$ ; 47,17% de CaO ; 4,72% de $MnO_2$ et 0,94% de $Cr_2O_3$.

2. Composition vitrocéramique selon la revendication 1, qui n'est constituée à l'issue de son élaboration et avant tout traitement thermique que d'une phase vitreuse amorphe.

3. Composition vitrocéramique selon la revendication 1, comprenant plus de 50% en poids de phase cristalline et de préférence 100% en poids de phase cristalline, après son maintien à un palier de température de 600°C à 1000°C, notamment de 700 à 950°C, par exemple de 800°C à 900°C, plus précisément de 800°C à 850°C, pendant une durée supérieure à 1 heure, de préférence de 50 heures à 720 heures, de préférence encore de 50 à 100 heures, ledit palier de température étant atteint en observant une ou plusieurs rampe(s) de montée en température à raison de 0,5 à 3°C/minute.

4. Composition selon l'une quelconque des revendications précédentes, dans laquelle la composition (A) est choisie parmi les compositions Al, et A4 à A12 présentées dans le tableau ci-dessous :

| | | SiO$_2$ | | Al$_2$O$_3$ | | CaO | | ZnO | | MnO$_2$ | | B$_2$O$_3$ | | Cr$_2$O$_3$ | | TiO$_2$ | |
|---|---|---|---|---|---|---|---|---|---|---|---|---|---|---|---|---|---|
| | | %mol. | %mass. | %mol. | %mass. | %mol. | %mass. | %mol. | %mass. | %mol. | %mass. | %mol. | %mass. | %mol. | %mass. | %mol. | %mass. |
| A1 (CAS) | | 40,00 | 38,60 | 10,00 | 16,37 | 50,00 | 45,03 | | | | | | | | | | |
| A4 (CAS_B) | | 39,02 | 37,55 | 9,76 | 15,93 | 48,78 | 43,80 | | | | | 2,44 | 2,72 | | | | |
| A5 (CAS_B2) | | 38,10 | 36,55 | 9,52 | 15,51 | 47,62 | 42,64 | | | | | 4,76 | 5,29 | | | | |
| A6 (CAS_Mn2) | | 39,02 | 37,53 | 9,76 | 15,92 | 48,78 | 43,78 | | | 2,44 | 2,77 | | | | | | |
| A7 (CAS_Mn) | | 38,10 | 36,52 | 9,52 | 15,49 | 47,62 | 42,60 | | | 4,76 | 5,39 | | | | | | |
| A8 (CAS_Mn3) | | 36,36 | 34,65 | 9,09 | 14,70 | 45,45 | 40,42 | | | 9,09 | 10,23 | | | | | | |
| A9 (CAS_Mn_Cr) | | 37,74 | 35,69 | 9,43 | 15,14 | 47,17 | 41,64 | | | 4,72 | 5,27 | | | 0,94 | 2,26 | | |
| A10 (CAS_Zn) | | 38,10 | 36,23 | 9,52 | 15,37 | 47,62 | 42,27 | 4,76 | 6,14 | | | | | | | | |
| A11 (CAS2BT) | | 41,46 | 38,71 | 11,76 | 18,62 | 39,48 | 34,40 | | | | | 5,09 | 5,51 | | | 2,22 | 2,75 |
| A12 (CAS2B) | | 42,4 | 39,81 | 12,02 | 19,15 | 40,37 | 35,38 | | | | | 5,20 | 5,66 | | | | |

**5.** Composition vitrocéramique selon l'une quelconque des revendications 1 à 4, qui se présente sous la forme d'une poudre.

**6.** Procédé d'assemblage d'au moins deux pièces, dans lequel on réalise les étapes successives suivantes :

a) on met en contact les pièces avec une composition selon l'une quelconque des revendications 1 à 5 ;
b) on chauffe l'ensemble formé par les pièces et la composition en observant une rampe de température ou plusieurs rampe(s) de température, éventuellement séparée(s) ou interrompue(s) par un ou plusieurs palier(s) de température, à une vitesse de chauffage comprise entre 0,5 et 3°C/min, jusqu'à une température T1 suffisante pour ramollir la composition afin de former un joint entre les pièces ; puis on maintient l'ensemble à une température T2, inférieure ou égale à T1, suffisante, et pendant une durée suffisante pour que la composition se solidifie et comprenne plus de 50% en poids de phase cristalline et de préférence comprenne 100% en poids de phase cristalline ;
c) on refroidit l'assemblage formé par les pièces et le joint jusqu'à la température ambiante ou la température de fonctionnement.

**7.** Procédé selon la revendication 6, dans lequel l'ensemble formé par les pièces et la composition est maintenu à un palier à une température T2 de 600°C à 1000°C, notamment de 700°C à 950°C, par exemple de 800 à 900°C, plus précisément de 800°C à 850°C, pendant une durée supérieure à 1 heure, de préférence de 50 heures à 720 heures, de préférence encore de 50 à 100 heures.

**8.** Procédé selon la revendication 6 ou 7, dans lequel l'étape de mise en contact des pièces avec la composition est réalisée en formant une poudre de la composition, cette poudre ayant de préférence une granulométrie inférieure à 20 $\mu$m, en mettant en suspension cette poudre dans un liant organique de façon à obtenir une pâte, et en enduisant au moins une surface des pièces à assembler avec la pâte obtenue.

**9.** Procédé selon la revendication 8, dans lequel avant d'atteindre la température T1, on observe un palier à une température T3 suffisante pendant une durée suffisante pour éliminer le liant organique, par exemple on observe un palier à une température T3 de 300 à 500°C, par exemple 400°C, pendant une durée de 60 à 180 minutes, par exemple 240 minutes.

**10.** Procédé selon la revendication 9, dans lequel lors de l'étape b), on réalise le protocole suivant : montée à 0,5°C/minute à partir de la température ambiante, plateau à 400°C pendant 120 minutes, montée à 3°C/minute depuis 400°C ; plateau à 800-950°C pendant 50 heures à 120 heures, descente à raison de 3°C/minute jusqu'à la température ambiante ou jusqu'à la température de fonctionnement.

**11.** Procédé selon la revendication 6 ou 7, dans lequel l'étape de mise en contact des pièces avec la composition est réalisée en préparant une pièce en verre ayant la forme du joint à former puis en mettant en place cette pièce entre les surfaces des pièces à assembler.

**12.** Procédé selon la revendication 11, dans lequel ladite pièce en verre est préparée en compactant puis en frittant une poudre de la composition dans un moule conforme à la forme de la pièce en verre.

**13.** Procédé selon la revendication 11, dans lequel ladite pièce en verre est un bloc de verre massif préparé par coulée directe de la composition en fusion dans un moule conforme à la forme de la pièce en verre.

**14.** Procédé selon l'une quelconque des revendications 6 à 13, dans lequel les pièces à assembler sont en un matériau choisi parmi les métaux ; les alliages métalliques ; les céramiques ; et les matériaux composites comprenant plusieurs parmi les matériaux précités.

**15.** Procédé selon l'une quelconque des revendications 6 à 14, dans lequel les au moins deux pièces à assembler sont en des matériaux différents.

**16.** Procédé selon l'une quelconque des revendications 6 à 15, dans lequel les au moins deux pièces à assembler sont des pièces d'un électrolyseur haute température « EHT » ou d'une pile à combustible haute température « SOFC ».

**17.** Utilisation d'une composition selon l'une quelconque des revendications 1 à 5, pour un joint dans un appareil fonctionnant à hautes températures, par exemple de 600°C à 1000°C.

**18.** Utilisation selon la revendication 17, dans un assemblage.

**19.** Utilisation selon l'une quelconque des revendications 17 à 18, dans un électrolyseur haute température ou dans une pile à combustible haute température.

**Patentansprüche**

**1.** Glaskeramikzusammensetzung, **dadurch gekennzeichnet, dass** sie ausgewählt ist aus der Gruppe umfassend:

• eine Zusammensetzung (A), die in Molprozent besteht aus:

- 36 bis 43 % $SiO_2$, vorzugsweise 36 bis 42 % $SiO_2$;
- 9 bis 13 % $Al_2O3$, vorzugsweise 9 bis 12 % $Al_2O_3$;
- 38 bis 50 % CaO; und

einem oder mehreren zusätzlichen Oxiden, ausgewählt aus den nachfolgenden Oxiden in nachfolgenden Molprozenten:

- 4 bis 5 % ZnO;
- 2 bis 9 % $MnO_2$;
- 2 bis 6 % $B_2O3$;
- 2 bis 4 % $TiO_2$;

• und eine Zusammensetzung (A9), die in Molprozent besteht aus 37,74 % $SiO_2$; 9,43 % $Al_2O_3$; 47,17 % CaO; 4,72 % $MnO_2$ und 0,94 % $Cr_2O_3$.

**2.** Glaskeramikzusammensetzung nach Anspruch 1, wobei sie nach deren Herstellung und vor jeglicher Wärmebehandlung nur aus einer amorphen Glasphase besteht.

**3.** Glaskeramikzusammensetzung nach Anspruch 1, enthaltend mehr als 50 Gew.-% kristalline Phase und vorzugsweise 100 Gew.-% kristalline Phase nach deren Halten auf einer Temperaturstufe von 600 °C bis 1000 °C, insbesondere von 700 bis 950 °C, beispielsweise 800 °C bis 900°C, insbesondere von 800 °C bis 850 °C für eine Dauer von über 1 Stunde, vorzugsweise 50 Stunden bis 720 Stunden, noch bevorzugter 50 bis 100 Stunden, wobei die Temperaturstufe erreicht wird, indem eine oder mehrere Temperaturanstiegsrampen um 0,5 bis 3 °C/Minute eingehalten werden.

**4.** Zusammensetzung nach einem der vorangehenden Ansprüche, wobei die Zusammensetzung (A) ausgewählt ist aus den in der nachstehenden Tabelle angeführten Zusammensetzungen A1 und A4 bis A12:

| | SiO$_2$ | | Al$_2$O$_3$ | | CaO | | ZnO | | MnO$_2$ | | B$_2$O$_3$ | | Cr$_2$O$_3$ | | TiO$_2$ | |
|---|---|---|---|---|---|---|---|---|---|---|---|---|---|---|---|---|
| | %mol. | %mass. | %mol. | %mass. | %mol. | %mass. | %mol. | %mass. | %mol. | %mass. | %mol. | %mass. | %mol. | %mass. | %mol. | %mass. |
| A1 (CAS) | 40,00 | 38,60 | 10,00 | 16,37 | 50,00 | 45,03 | | | | | | | | | | |
| A4 (CAS_B) | 39,02 | 37,55 | 9,76 | 15,93 | 48,78 | 43,80 | | | | | 2,44 | 2,72 | | | | |
| A5 (CAS_B2) | 38,10 | 36,55 | 9,52 | 15,51 | 47,62 | 42,64 | | | | | 4,76 | 5,29 | | | | |
| A6 (CAS_Mn2) | 39,02 | 37,53 | 9,76 | 15,92 | 48,78 | 43,78 | | | 2,44 | 2,77 | | | | | | |
| A7 (CAS_Mn) | 38,10 | 36,52 | 9,52 | 15,49 | 47,62 | 42,60 | | | 4,76 | 5,39 | | | | | | |
| A8 (CAS_Mn3) | 36,36 | 34,65 | 9,09 | 14,70 | 45,45 | 40,42 | | | 9,09 | 10,23 | | | | | | |
| A9 (CAS_Mn_Cr) | 37,74 | 35,69 | 9,43 | 15,14 | 47,17 | 41,64 | | | 4,72 | 5,27 | | | 0,94 | 2,26 | | |
| A10 (CAS_Zn) | 38,10 | 36,23 | 9,52 | 15,37 | 47,62 | 42,27 | 4,76 | 6,14 | | | | | | | | |
| A11 (CAS2BT) | 41,46 | 38,71 | 11,76 | 18,62 | 39,48 | 34,40 | | | | | 5,09 | 5,51 | | | 2,22 | 2,75 |
| A12 (CAS2B) | 42,4 | 39,81 | 12,02 | 19,15 | 40,37 | 35,38 | | | | | 5,20 | 5,66 | | | | |

27

**5.** Glaskeramikzusammensetzung nach einem der Ansprüche 1 bis 4, wobei sie in Form eines Pulvers vorliegt.

**6.** Verfahren zum Zusammenfügen von zumindest zwei Teilen, wobei die nachstehenden, aufeinanderfolgenden Schritte erfolgen:

a) Inkontaktbringen der Teile mit einer Zusammensetzung nach einem der Ansprüche 1 bis 5;

b) Erwärmen des aus den Teilen und der Zusammensetzung gebildeten Gefüges, indem eine Temperaturrampe oder mehrere Temperaturrampen eingehalten werden, die gegebenenfalls durch eine oder mehrere Temperaturstufen getrennt bzw. unterbrochen sind, mit einer Erwärmungsgeschwindigkeit zwischen 0,5 und 3 °C/min, bis auf eine Temperatur T1, die ausreicht, um die Zusammensetzung zu erweichen, um eine Dichtung zwischen den Teilen zu bilden; dann Halten des Gefüges auf einer ausreichenden Temperatur T2, die geringer oder gleich T1 ist, und für eine Dauer, die ausreicht, damit die Zusammensetzung erstarrt und mehr als 50 Gew.-% kristalline Phase und vorzugsweise 100 Gew.-% kristalline Phase enthält;

c) Abkühlen des aus den Teilen und der Dichtung gebildeten Zusammenfügen bis auf Umgebungstemperatur bzw. Betriebstemperatur.

**7.** Verfahren nach Anspruch 6, wobei das aus den Teilen und der Zusammensetzung gebildete Gefüge auf einer Temperaturstufe T2 von 600 °C bis 1000 °C, insbesondere von 700 bis 950 °C, beispielsweise 800 °C bis 900°C, insbesondere von 800 °C bis 850 °C für eine Dauer von über 1 Stunde, vorzugsweise 50 Stunden bis 720 Stunden, noch bevorzugter 50 bis 100 Stunden, gehalten wird.

**8.** Verfahren nach Anspruch 6 oder 7, wobei der Schritt des Inkontaktbringens der Teile mit der Zusammensetzung erfolgt, indem ein Pulver der Zusammensetzung gebildet wird, wobei dieses Pulver vorzugsweise eine Teilchengröße von unter 20 $\mu$m hat, indem dieses Pulver in einem organischen Bindemittel in Suspension gebracht wird, so dass eine Paste erhalten wird, und indem zumindest eine Fläche der zusammenzufügenden Teile mit der erhaltenen Paste überzogen wird.

**9.** Verfahren nach Anspruch 8, wobei vor dem Erreichen der Temperatur T1 eine Temperaturstufe mit einer ausreichenden Temperatur T3 für eine ausreichende Dauer eingehalten wird, um das organische Bindemittel zu beseitigen, wobei beispielsweise eine Temperaturstufe mit einer Temperatur T3 von 300 bis 500 °C, beispielsweise 400 °C, für eine Dauer von 60 bis 180 Minuten, beispielsweise 240 Minuten, eingehalten wird.

**10.** Verfahren nach Anspruch 9, wobei in Schritt b) das nachfolgende Protokoll erstellt wird: Anstieg um 0,5°C/Minute ausgehend von der Umgebungstemperatur, Halten bei 400 °C für 120 Minuten, Anstieg um 3 °C/Minute ausgehend von 400 °C; Halten auf 800 bis 950 ° für 50 Stunden bis 120 Stunden, Absinken um 3 °C/Minute bis auf Umgebungstemperatur oder bis auf Betriebstemperatur.

**11.** Verfahren nach Anspruch 6 oder 7, wobei der Schritt des Inkontaktbringens der Teile mit der Zusammensetzung erfolgt, indem ein Glasteil mit der Form der zu bildenden Dichtung hergestellt wird, dann dieses Teils zwischen die Flächen der zusammenfügenden Teile eingesetzt wird.

**12.** Verfahren nach Anspruch 11, wobei das Glasteil hergestellt wird, indem ein Pulver der Zusammensetzung in einer Gießform, die der Form des Glasteils entspricht, verdichtet und dann gesintert wird.

**13.** Verfahren nach Anspruch 11, wobei das Glasteil ein massiver Glasblock ist, der durch direktes Gießen der geschmolzenen Zusammensetzungsschmelze in eine Gießform, die der Form des Glasteils entspricht, hergestellt wird.

**14.** Verfahren nach einem der Ansprüche 6 bis 13, wobei die zusammenzufügenden Teile aus einem Material bestehen, das ausgewählt ist aus Metallen; Metalllegierungen; Keramiken; Verbundmaterialien, die mehrere der vorgenannten Materialien enthalten.

**15.** Verfahren nach einem der Ansprüche 6 bis 14, wobei die zumindest zwei zusammenzufügenden Teile aus unterschiedlichen Materialien bestehen.

**16.** Verfahren nach einem der Ansprüche 6 bis 15, wobei die zumindest zwei zusammenzufügenden Teile Teile eines Hochtemperatur-Elektrolyseurs "EHT" oder einer Hochtemperatur-Brennstoffzelle "SOFC" sind.

**17.** Verwendung einer Zusammensetzung nach einem der Ansprüche 1 bis 5 für eine Dichtung in einem Gerät, das bei hohen Temperaturen, beispielsweise von 600 °C bis 1000 °C, betrieben wird.

18. Verwendung nach Anspruch 17 in einem Zusammenfügen.

19. Verwendung nach einem der Ansprüche 17 bis 18 in einem Hochtemperatur-Elektrolyseur oder in einer Hochtemperatur-Brennstoffzelle.

**Claims**

1. A vitroceramic composition **characterized in that** it is selected from the group consisting of:

   • a composition (A) consisting in molar percentages of:

      - 36 to 43% of $SiO_2$, preferably 36 to 42% of $SiO_2$;
      - 9 to 13% of $Al_2O3$, preferably 9 to 12% of $Al_2O_3$ ;
      - 38 to 50% of CaO; and of one or several additional oxide(s) selected from the following oxides in the following molar percentages:
      - 4 to 5% of ZnO;
      - 2 to 9% of $MnO_2$;
      - 2 to 6% of $B_2O_3$;
      - 2 to 4% of $TiO_2$;

   • and a composition (A9) consisting in molar percentages of 37.74% of $SiO_2$; 9.43% of $Al_2O_3$; 47.17% of CaO; 4.72% of $MnO_2$ and 0.94% of $Cr_2O_3$.

2. The vitroceramic composition according to claim 1, which at the end of its elaboration and before any heat treatment only consists of an amorphous glassy phase.

3. The vitroceramic composition according to claim 1, comprising more than 50% by weight of crystalline phase and preferably 100% by weight of crystalline phase, after maintaining it at a temperature plateau from 600°C to 1,000°C, notably from 700 to 950°C, for example from 800°C to 900°C, more specifically from 800°C to 850°C, for a duration of more than 1 hour, preferably from 50 hours to 720 hours, still preferably from 50 to 100 hours, said temperature plateau being reached by observing one or several temperature rise ramps at a rate from 0.5 to 3°C/minute.

4. The composition according to any one of the preceding claims, wherein the composition (A) is selected from the compositions A1, and A4 to A12 shown in the table below:

| Molar % / Mass % | SiO$_2$ % mol. | SiO$_2$ % mass. | Al$_2$O$_3$ % mol. | Al$_2$O$_3$ % mass. | CaO % mol. | CaO % mass. | ZnO % mol. | ZnO % mass. | MnO$_2$ % mol. | MnO$_2$ % mass. | B$_2$O$_3$ % mol. | B$_2$O$_3$ % mass. | Cr$_2$O$_3$ % mol. | Cr$_2$O$_3$ % mass. | TiO$_2$ % mol. | TiO$_2$ % mass. |
|---|---|---|---|---|---|---|---|---|---|---|---|---|---|---|---|---|
| A1 (CAS) | 40.00 | 38.60 | 10.00 | 16.37 | 50.00 | 45.03 | | | | | | | | | | |
| A4 (CAS_B) | 39.02 | 37.55 | 9.76 | 15.93 | 48.78 | 43.80 | | | | | 2.44 | 2.72 | | | | |
| A5 (CAS_B2) | 38.10 | 36.55 | 9.52 | 15.51 | 47.62 | 42.64 | | | | | 4.76 | 5.29 | | | | |
| A6 (CAS_Mn2) | 39.02 | 37.53 | 9.76 | 15.92 | 48.78 | 43.78 | | | 2.44 | 2.77 | | | | | | |
| A7 (CAS_Mn) | 38.10 | 36.52 | 9.52 | 15.49 | 47.62 | 42.60 | | | 4.76 | 5.39 | | | | | | |
| A8 (CAS_Mn3) | 36.36 | 34.65 | 9.09 | 14.70 | 45.45 | 40.42 | | | 9.09 | 10.23 | | | | | | |
| A9 (CAS_Mn_Cr) | 37.74 | 35.69 | 9.43 | 15.14 | 47.17 | 41.64 | | | 4.72 | 5.27 | | | 0.94 | 2.26 | | |
| A10 (CAS_Zn) | 38.10 | 36.23 | 9.52 | 15.37 | 47.62 | 42.27 | 4.76 | 6.14 | | | | | | | | |
| A11 (CAS2BT) | 41.46 | 38.71 | 11.76 | 18.62 | 39.48 | 34.40 | | | | | 5.09 | 5.51 | | | 2.22 | 2.75 |
| A12 (CAS2B) | 42.4 | 39.81 | 12.02 | 19.15 | 40.37 | 35.38 | | | | | 5.20 | 5.66 | | | | |

**5.** The vitroceramic composition according to any one of claims 1 to 4, which is in the form of a powder.

**6.** A method for assembling at least two parts, wherein the following successive steps are performed:

a) the parts are put into contact with a composition according to any one of claims 1 to 5;

b) the assembly formed by the parts and the composition is heated while observing a temperature ramp or several temperature ramps, optionally separated or interrupted by one or several temperature plateau(s), at a heating rate comprised between 0.5 and 3°C/min, up to a temperature T1 sufficient for softening the composition in order to form a gasket between the parts; the assembly is then maintained at a sufficient temperature T2, less than or equal to T1, and for a sufficient duration so that the composition solidifies and comprises more than 50% by weight of crystalline phase and preferably comprises 100% by weight of crystalline phase;

c) the assembly formed by the parts and the gasket is cooled down to room temperature or to the operating temperature.

**7.** The method according to claim 6, wherein the assembly formed by the parts and the composition is maintained at a plateau at a temperature T2 from 600°C to 1,000°C, notably from 700°C to 950°C, for example from 800 to 900°C, more specifically from 800°C to 850°C, for a duration of more than 1 hour, preferably from 50 hours to 720 hours, still preferably from 50 to 100 hours.

**8.** The method according to claim 6 or 7, wherein the step of putting the parts into contact with the composition is performed by forming a powder of the composition, this powder preferably having a grain size of less than 20 $\mu$m, by suspending this powder in an organic binder so as to obtain a paste, and by coating at least one surface of the parts to be assembled with the obtained paste.

**9.** The method according to claim 8, wherein before reaching the temperature T1, a plateau is observed at a sufficient temperature T3 for a sufficient duration for removing the organic binder, for example a plateau is observed at a temperature T3 from 300 to 500°C, for example 400°C, for a duration from 60 to 180 minutes, for example 240 minutes.

**10.** The method according to claim 9, wherein during step b), the following procedure is carried out: raising the temperature at 0.5°C/minute from room temperature, plateau at 400°C for 120 minutes, raising the temperature at 3°C/minute from 400°C; plateau at 800-950°C for 50 hours to 120 hours, lowering the temperature at a rate of 3°C/minute down to room temperature or down to the operating temperature.

**11.** The method according to claim 6 or 7, wherein the step of putting the parts into contact with the composition is carried out by preparing a glass part having the shape of the gasket to be formed and then setting this part into place between the surfaces of the parts to be assembled.

**12.** The method according to claim 11, wherein said glass part is prepared by compacting and then sintering a powder of the composition in a mold matching the shape of the glass part.

**13.** The method according to claim 11, wherein said glass part is a solid, massive glass block prepared by direct casting of the molten composition into a mold matching the shape of the glass part.

**14.** The method according to any one of claims 6 to 13, wherein the parts to be assembled are made of a material selected from metals; metal alloys; ceramics; and composite materials comprising several of the aforementioned materials.

**15.** The method according to any one of claims 6 to 14, wherein said at least two parts to be assembled are made of different materials.

**16.** The method according to any one of claims 6 to 15, wherein said at least two parts to be assembled are parts of a high temperature electrolyzer « HTE » or of a high temperature fuel cell « SOFC ».

**17.** Use of a composition according to any one of claims 1 to 5, for a gasket in an apparatus operating at high temperatures, for example from 600°C to 1000°C.

**18.** Use according to claim 17, in an assembly.

**19.** Use according to any one of claims 17 to 18, in a high temperature electrolyzer or in a high temperature fuel cell.

$2H_2$

$O_2$

$2O^{2-}$

4

$2H_2O$

$4e^-$

$-$ $+$

$4e^-$

## FIG.1

$e^-$

$H_2O$

$e$

$H_2$

$O^{2-}$

$e$

$O_2$

$e^-$

## FIG.2

FIG.3

Cellule {
2 - Cathode 30-50µm
3 - Electrolyte 80-200µm
1 - Anode 30-50µm
}

≈300µm

FIG.4

**FIG.5**

**FIG.6**

**FIG.7**

**FIG.8**

FIG. 9

FIG.12

**FIG.13**

**FIG.14**

153

154

152

154

151

**FIG.17**

155

153

154

152

154

151

**FIG.18**

**FIG. 19**

EP 2 552 848 B1

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4921738 A
- WO 9605626 A1
- US 6430966 B1
- US 6532769 B1
- US 20080090715 A1
- WO 2007120546 A2
- WO 9954131 A1
- WO 2006069753 A1
- US 6828263 B2

**Littérature non-brevet citée dans la description**

- **ZHENG R. et al.** *Journal of Power Sources,* 2004, vol. 128, 165-172
- **EICHLER K. et al.** *Journal of the European Ceramic Society,* 1999, vol. 19, 1101-1104
- **LOEHMAN R. et al.** Engineered Glass Composites for Sealing Solid Oxide Fuel Cells. *SECA Core Technology Program Review,* 11 Mai 2004
- **MEINHARDT KD et al.** *Journal of Power Sources,* 2008, vol. 182, 188-196
- **LEY KL et al.** *Journal of Material Research,* 1996, vol. 11 (6), 1489-1496
- **GEASEE P.** *Thesis,* 2003, ISBN 3-8325-0301-3
- **LAHL et al.** *journal of Material Science,* 2000, vol. 35, 3089-3096
- **BAHADUR D et al.** *Journal of the Electrochemical Society,* 2004, vol. 151 (4), A558-A562
- **FLÜGEL A et al.** *Journal of the Electrochemical Society,* 2007, vol. 154 (6), A601-A608
- **PASCUAL et al.** *Journal of Power Sources,* 2007, vol. 169, 40-46